# EUROPEAN PATENT SPECIFICATION

(11) **EP 3 821 101 B1**
(45) Date of publication and mention of the grant of the patent: **23.07.2025**
(21) Application number: 19744620.6
(22) Date of filing: 15.07.2019
(51) Int. Cl.: E06B 3/66, E06B 3/673, E06B 3/677

(54) **MANUFACTURING OF GLASS SHEET ASSEMBLIES BY MEANS OF PRE-HEATED EDGE SEALING MATERIAL**
HERSTELLUNG VON GLASSCHEIBENANORDNUNGEN MIT VORGEHEIZTEM RANDDICHTUNGSMATERIAL
FABRICATION D'ENSEMBLES DE FEUILLES DE VERRE AU MOYEN D'UN MATÉRIAU D'ÉTANCHÉITÉ DE BORD PRÉCHAUFFÉ

(30) Priority: 13.07.2018 DK PA201870484
(43) Date of publication of application: 19.05.2021
(73) Proprietor: VKR Holding A/S, 2970 Hørsholm (DK)
(72) Inventor: ANDERSEN, Søren Vejling, 2970 Hørsholm (DK); KRISKO, Annette Johncock, 2970 Hørsholm (DK); JOHNSEN, Simon, 2970 Hørsholm (DK)
(74) Representative: Zacco Denmark A/S
(86) International application number: PCT/DK2019/050227
(87) International publication number: WO 2020/011328

(56) References cited:
- EP-A1- 1 571 134
- CA-A- 996 337
- US-A1- 2009 151 855

## Description

The present invention relates to a method of providing an edge sealing of a glass material in the process of providing a glass sheet assembly for a vacuum insulated glass unit.

### Background

Vacuum insulating glass/glazing units (VIG units) typically comprise two glass panes/sheets spaced by support structures distributed between the panes/sheets, where the glass panes/sheets are sealed by an edge sealing at the periphery and where a gap between the two panes/sheets have been evacuated to provide a gap with decreased pressure to enhance the insulation performance.

The gap may be evacuated through e.g. a hole in one of the glass sheets to a pressure such as about 1E-6 bar or lower. The seal at the periphery of the glass sheets accordingly needs to be tight in order to provide that the desired internal pressure in the void can be maintained for several years such as between 10 and 20 years or even more, and various conditions may impact on this.

Various ways of manufacturing VIG units as known. Among these are the solutions disclosed in e.g. US2003/0108692 and US 6,793,990, where a molten metal material for the edge sealing may be used, and where the metal material is melted in a melting pot before it is applied between two paired glass sheets.

CN201793481U discloses manufacturing of VIG units comprising tempered glass sheets, and where a glass powder heating device heats glass powder for a VIG edge sealing. The tempered glass sheets are paired and pre-heated before the heated glass powder is applied.

Moreover it is known to utilize a solder glass having a low melting point. This solder glass is mixed with a binder and solvent, applied to a glass sheet surface to provide an edge sealing, and the solvent is evaporated, the binder is burned out and the glass material is then melted.

However, one or more of the above mentioned solutions may provide drawbacks with regard to e.g. manufacturing speed/capacity, end product quality and/or other drawbacks which the present disclosure may help to solve.

EP1571134A1 also discloses a method of providing an edge sealing of a glass material in the process of providing a glass sheet assembly for a vacuum insulated glass unit comprising paired glass sheets separated by support structures maintaining a gap between said paired glass sheets. CA996337A discloses an apparatus for the manufacture of multiple pane windows comprising means to heat a pair of glass sheets along an edge thereof, a nozzle adjacent said heating means for injection of a heat-fusible sealant between said sheets, and means adjacent said nozzle to cool said sealant after injection thereof between said sheets.

### Summary

In a first aspect of the present invention, the present disclosure relates to a method of providing an edge sealing of a glass material in the process of providing a glass sheet assembly for a vacuum insulated glass unit comprising paired glass sheets separated by support structures maintaining a gap between said paired glass sheets. The method comprises:
providing one or more tempered glass sheets,
heating a glass material to soften the glass material, and
applying the heated, softened glass material at said one or more glass sheets by means of a nozzle to provide an edge sealing for sealing the gap between the paired glass sheets.

One or more heaters may locally heat a zone of the tempered glass sheet or sheets where the heated, softened glass material is applied to provide the edge sealing, so as to increase the temperature of said zone compared to the surrounding part of the glass sheet or sheets comprising the heated zone.

The finalized VIG unit comprises a gap between two glass sheets which has been evacuated, and which is enclosed by the edge sealing. Support structures are placed in this gap to maintain the gap when the gap is evacuated and sealed. By using tempered glass sheets, this may e.g. help to provide a VIG unit where the distance between the support structures may be increased compared to if the glass sheets are annealed glass sheets. However, the tempered glass sheets may at least partly de-temper if heated to a high temperature, and if this is provided at the areas of the glass sheets supporting on the support structures such as support pillars between the glass sheets, the glass sheets may weaken and thus be damaged during the manufacturing, e.g. when the gap is evacuated or later on.

Locally heating the tempered glass sheet or glass sheets for the VIG unit at the areas where the heated and softened glass material is applied instead of heating the entire glass sheet may reduce the risk of de-tempering, and thereby weakening, parts of the glass sheet(s) that support on the support structures.

Generally, it is understood that the glass material for the edge sealing may be heated to a temperature where it melts to soften, and is applied in a heated state at a temperature and in a condition through the nozzle outlet that provides a sufficient bonding to the glass sheets. The edge sealing should subsequently be able to seal the gap between the glass sheets so that the gap can be evacuated to a pressure below 10⁻³ bar, e.g. below 10⁻⁴ bar, such as below 10⁻⁵ bar, such as below 10⁻⁶ bar, and the edge sealing should be able to maintain this sealing for several years such as between 15-25 years.

With tempered glass sheets, supports structures may be separated with a distance above 35 mm, such as between 38mm and 60mm, e.g. about 40 mm or such as about 50 mm, thereby minimizing the visible distraction that may be experienced due to the spacers when looking through the glass and minimizing the heat transfer between the glass panes.

In one or more aspects of the present disclosure, the applied, heated glass material may be provided at a temperature where it is softer than before the heating, but at a temperature providing that it may have "self-standing" properties.

In one or more aspects of the present disclosure, the local heating may help to provide a good bonding of the heated and softened glass sheet material to the glass sheets.

The local heating may moreover or alternatively allow usage of a wider range of glass material for the edge sealing, e.g. glass material which may need to be heated to a temperature above the de-tempering temperature of the glass sheet to properly soften before it is applied by the nozzle.

Additionally or alternatively, the local heating may help to provide the possibility of selecting between a wider range of materials for the support structures.

Applying the glass material for the edge sealing in a heated and softened state may moreover or alternatively help to provide a fast and/or manufacturing of VIG units that may fit larger scale manufacturing demands, and at the same time provide a strong edge sealing.

The glass material for the edge sealing may e.g., in one or more aspects of the present disclosure, be heated to a temperature where it can be extruded through the nozzle.

According to the present invention, said local heating of the zone is provided prior to applying said heated, softened glass material for the edge sealing, and wherein the heated, softened glass material is applied at the heated zone. This may e.g. help to provide a good bonding between the heated and softened glass material when the heated and softened glass material is applied. It may also or alternatively help to avoid damaging the glass sheet or sheets due to a too large temperature difference between the glass sheet and the heated and softened glass material.

In one or more aspects of the present disclosure, said local heating of the zone may be provided after said heated, softened glass material for the edge sealing is applied.

This may in one or more aspects of the present disclosure also provide a heating of the applied softened glass material, e.g. to a condition where it may become more fluid/soft, and/or may help to maintain the temperature of the applied glass material. This may e.g. help to provide a good bonding to the glass sheets of the VIG unit assembly/glass sheet assembly, and/or may help to assure a strong and long lasting edge sealing.

It is generally to be understood that in one or more aspects of the present disclosure, the local heating may be provided at the zone or zones of the glass sheet or sheets where the glass material is applied, while the glass material is applied to the zone or zones.

In one or more aspects of the present disclosure, said locally heated zone may be heated to a temperature above 50°C such as above 200°C, e.g. above 300°C such as above 400°C.

This may e.g. help to provide a solution where the glass sheet(s) is/are not damaged and/or that the characteristic of the glass sheets does not alter. It may also help to provide that a glass material having a higher softening temperature may be used.

In one or more aspects of the present disclosure, said zone may be heated to a temperature between 150°C and 750°C such as between 200°C and 650 °C, e.g. between 300 °C and 420 °C.

In one or more aspects of the present disclosure, the local heating may e.g. be provided to heat the zone to a temperature where a characteristic of the glass sheet(s), such as a stress condition in the glass sheet(s), at the heated zone, may alter, e.g. so that a stress condition, such as compressive stress condition, reduces compared to the part of the glass sheet(s) that is not heated locally.

In one or more aspects of the present disclosure, said zone may be heated to a temperature which is at least 100°C higher, such as at least 200°C higher, e.g. at least 300°C higher such as at least 400°C, e.g. at least 500 °C higher than the temperature of the glass sheet or sheets comprising the heated zone, measured at another location than the heated zone.

The temperature difference may in embodiments of the present disclosure be measured at the heated zone and the centre of a major surface of the glass sheet, midways between the centre and the heated zone, and/or more than five cm., such as more than 10 cm from the heated zone, and/or substantially at the centre of a major surface of the glass.

In one or more aspects of the present disclosure, one or more of said one or more heaters for providing said local heating may comprise a radiation heater such as an electromagnetic radiation heater.

Such heaters may e.g. provide a solution where the manufacturing speed is increased and/or the manufacturing complexity is reduced. Also or alternatively, it may provide a solution which reduces the risk of contaminating surfaces of the glass sheets during heating, which may e.g. help to reduce the risk of unintentional pressure increase over time in an evacuated gap of a VIG.

The radiation heater may e.g., in one or more aspects of the present disclosure, be arranged so it does not physically touch the glass sheet or sheets s to be heated at the zone(s).

In one or more aspects of the present disclosure, said one or more radiation heaters may emit electromagnetic radiation in the range of 300-4000 nm such as in the range of 600-2000 nm, e.g. in the range of 1000 nm - 1100 nm.

This may e.g. be provided by means of a laser heater and/or any other suitable type of radiation heater, such as an infrared heater that may be used for heating a surface of the glass sheet(s).

In one or more aspects of the present disclosure, the heater or heaters for providing the local heating, such as an radiation heater, may comprise an induction heater.

In one or more aspects of the present disclosure, said one or more heaters for providing the local heating may comprises one or more heating elements such as electric heating elements.

In one or more aspects of the present disclosure, said one or more radiation heater(s) may comprise a laser for example, emitting light, where the light from the laser is aiming towards an area/the zone of the one or more glass sheets to be heated.

This may e.g. provide a solution which may be easy to control, and/or may provide a solution where the heating may be provided without a physical contact between heater(s) and glass sheet(s). For example, the laser may emit electromagnetic radiation having a wavelength in the above mentioned range(s). In aspects, it may be a 1064 nm laser. This wave length has be found to be able to provide a local heating of a glass sheet surface of e.g. a tempered glass sheet.

In one or more embodiments, the laser is a continuous wave laser or a pulsed laser, wherein the continuous wave laser or a pulsed laser are emitting light in the near-infrared or infrared wavelength range. By using a laser, a localized, efficient, and fast pre-heating of the tempered glass sheet or sheets is possible.

In one or more examples, the laser is a diode laser, a fibre laser, a solid state laser, or similar. An example of a laser is a 980 nm diode laser. A Thulium fibre laser (e.g. a 200 w laser) emitting light in the IR wavelength range around 2.05 µm is a further example of suitable laser.

A solid state laser such as an yttrium aluminum garnet (YAG) laser, e.g. a Yb:YAG laser (Ytterbium-doped YAG laser), a Tm:YAG laser (Thulium-doped YAG laser), a Mo:YAG laser (Erbium-doped YAG laser), a Er:YAG laser (Erbium-doped YAG laser), or a Nd:YAG laser (Neodymium-doped YAG laser), e.g. emitting light in the NIR wavelength range such as at 946 nm, 1064 nm, or 1319 nm, may also be used. Other types of laser may also be used, such as He-Ne lasers emitting light at e.g. 1152 nm, 1523 nm, or 3391 nm, a Ti:Sapphire laser emitting light in the wavelength range around e.g. 800 nm, an InGaAs laser emitting light in the wavelength range of 904-1065 nm, or 1270-1330 nm, or 1430-1570 nm, or a CO2 laser.

In one or more aspects of the present disclosure, said one or more radiation heaters may heat a layer arranged at the surface of said one or more glass sheet, e.g. by emitting an electromagnetic radiation through the glass sheet comprising said layer to be heated.

The radiated electromagnetic radiation may thus be configured to be absorbed and thereby heat the glass sheet locally by heating the layer. This may e.g. help to provide the possibility of selecting between a wider range of radiation heaters for providing the local heating.

The layer may e.g. be a metal layer or any other suitable layer which provide an absorption of electromagnetic waves and heats thereby.

Said layer may in one or more aspects be part of a low-e coating and/or may be applied separate so said low-e coating.

The radiation heater may in one or more aspects of the present disclosure comprise an induction heater for heating the layer.

In one or more aspects of the present disclosure, said one or more heaters for providing said local heating of the zone comprises a conduction heating unit, a convection heater configured to provide local convection heating, and/or a torch heater.

These heater solutions may e.g. provide one or more advantages as e.g. described previously, and/or help to provide a fast and/or controlled heating.

In one or more aspects of the present disclosure, said edge sealing may be applied to first and second glass sheets which are paired prior to applying the heated, softened glass material along edges of the glass sheets, and wherein said glass sheets are separated by support structures to provide the gap between the glass sheets.

This may e.g. help to provide a fast and/or more simple manufacturing of VIG units.

In one or more aspects of the present disclosure, said local heating may be provided locally to zones of both of said first and second glass sheets, for example simultaneously, and wherein said heated and softened glass material is provided to said zones.

This may e.g. help to provide a fast and/or simple heating solution.

In one or more aspects of the present disclosure, said local heating may be provided to a zone of one of the glass sheets by means of one or more first heaters, and wherein one or more second heaters locally heats a zone of the other of the glass sheets.

In further aspects of the present disclosure, one heater may be arranged to heat both zones at the same time, prior to during and/or after the heated and softened glass material is applied to the zones.

In one or more aspects of the present disclosure, said heated and softened glass material may be extruded so that it bond to an end surface of a first glass sheets and a surface of the other glass sheet extending beyond the end surface of the first glass sheet due to a stepped edge configuration.

The surface of the other glass sheet to which the glass material may be applied may be a major surface of the glass sheet.

In one or more aspects of the present disclosure, the heated glass material may also seal a gap between glass sheets of substantially the same size. It may here extend between the surfaces facing a gap between the glass sheets and may e.g. also cover at least a part of the end edge surface(s).

In one or more aspects of the present disclosure, the heated and softened glass material may be applied during a relative displacement between the glass sheet or sheets and the nozzle outlet.

In one or more aspects of the present disclosure, said local heating of a zone may be provided during a relative displacement between said one or more glass sheets and the one or more heaters for providing said local heating.

This may e.g. provide that the glass sheet(s) may be heated for a reduced amount of time.

In one or more aspects of the present disclosure, a heat shield may be arranged between a heating medium provided by said one or more heaters for the local heating of said zone(s) (52), and a remaining part of the glass sheet.

This heat shield may help to screen the main part of the glass sheet where the support structures support from the heating medium that heats the zone. The heating medium may e.g. be a flame, heated gas or air, and/or a radiant heating solution.

In one or more aspects of the present disclosure, said glass sheet or sheets and said one or more heaters may be moved relative to each other while the one or more heaters heat said surface(s).

In one or more aspects of the present disclosure, said one or more heaters for providing the local heating is/are arranged at a predetermined, fixed distance ahead and/or behind said nozzle, to provide said heating before and/or after the heated, softened glass material is applied.

This may e.g. help to provide a more simple manufacturing solution and/or help to provide that a uniform heating of the zone(s) is provided.

In one or more aspects of the present disclosure, said heated and thus softened glass material is applied to paired glass sheets separated by support structures, and wherein the glass material flows a distance more than 2mm such as more than 4 mm, e.g. more than 6mm such as more than 10mm into a gap between the glass sheets provided by the support structures.

The glass sheets may e.g. in this aspect e.g. be arranged substantially horizontally and may comprise a stepped edge configuration, or may comprise aligned end edges. In one or more aspects of the present disclosure, said heated and softened glass material may flow between 2mm and 30mm, such as between 2 and 15mm, e.g. between 2 and 8mm such as between 3 and 6 mm into the gap.

The glass material may in one or more aspects of the present disclosure flow into the gap between the glass sheets immediately after it is applied, and/or it may gradually flow into the gap during a subsequent time span after it has been applied.

In one or more aspects of the present disclosure, said heated glass material may be forced through a dispensing nozzle outlet by means of a pressure arrangement.

This may e.g. provide an extrusion solution where a controlled flow of heated and thereby softened glass material for an edge sealing material may be obtained. It may help to reduce the manufacturing time of a VIG unit and/or help to maintain a clean nozzle and/or environment wherein the heated glass material is applied.

In one or more aspects of the present disclosure, the pressure arrangement may be configured to provide a pressure between 0.1 and 6 bar, such as between 0.4 and 4 bar, e.g. between 0.2 to 2 bar to the heated, softened glass material so as to force it through the outlet.

The pressure arrangement may in one or more aspects comprise a displaceable member arranged to provide a pressure on the glass material to be heated, it may comprise a gas for providing the pressure by pressurizing the gas and/or the like.

For example, the heated a melted glass material for the edge sealing may be applied with between 3 and 200 cm/minute such as between 7 and 100 cm/minute, e.g. between 14 and 50 cm/minute by means of a nozzle by a relative movement between nozzle outlet and glass sheet or sheets. In one or more aspects of the present disclosure, the edge sealing may be applied even faster such as at a speed above 200 cm/minute

In one or more aspects of the present disclosure, a pressure control arrangement controls the pressure arrangement so as to control the flow of supplied, heated glass material, wherein said control at least comprises:
adjusting the applied pressure to stop the flow of heated glass material forced through the dispensing nozzle outlet, and
adjusting the applied pressure to start a flow of heated glass material forced through the dispensing nozzle outlet.

Said control of the pressure arrangement may in one or more aspects of the present disclosure be provided based on input from a sensor arrangement.

This may provide an efficient and yet simple solution for controlling when to apply the heated and softened glass material and/or how much heated glass material that should be applied. It may moreover enable a fast adaption of the applying to different glass sheet sizes and/or shapes.

The control may moreover or alternatively, in aspects, comprise that the pressure is controlled dependent on a relative displacement speed between the nozzle and the glass sheet(s), for example, the higher displacement speed, the higher pressure and vice versa.

In one or more aspects of the present disclosure, the glass material to be heated and softened may be compressed by a compression arrangement, e.g. before it is heated. In one or more aspects of the present disclosure said pressure arrangement may be configured to provide said compression arrangement.

This may e.g. provide a more simple and/or space saving, mechanical solution.

In one or more aspects of the present disclosure, a temperature control arrangement control the viscosity with which the glass material is applied by controlling a first and/or a second heating arrangement.

Generally, the glass material's viscosity decrease as the heating temperature rises. Accordingly, by rising the temperature of the heated glass material, this may risk that the glass material get too soft and end in a floating state where it flattens so it is not able to connect the glass sheets and form a proper edge sealing between opposing glass sheets, and/or that it unintentionally leaves the nozzle outlet, e.g. when moving from one glass sheet to the other. If it on the other side gets too hard due to a too low glass material temperature, this may cause that the glass sheets are e.g. subjected to undesired stresses when evacuating the gap between the glass sheets, and/or that it may be hard to press the glass material through a nozzle.

By providing a temperature control arrangement for controlling the viscosity of the glass material by controlling the first heating arrangement, so that the glass material is applied with a desired viscosity/softness, this may help to e.g. provide a long lasting VIG unit and/or help to improve the yield of VIG assemblies that has a high strength and are able to handle the decreased pressure in the gap between the glass sheets.

In one or more aspects of the present disclosure, the one or more glass sheets may be pre-heated by means of a further heating arrangement, such as in a furnace compartment of a furnace, before the heated glass material is applied and while said local heating of the zone is provided.

This may help to reduce the temperature difference between the applied, heated glass material and the temperature of the one or more glass sheets.

This may e.g. help to provide that the heater or heaters for providing the local heating may not need to heat the zone(s) over a large temperature range but only may need to raise/increase the temperature difference from the temperature achieved by means of the further heating arrangement and the to the desired local heating temperature for the zone(s).

It is understood that the further heating arrangement may heat the entire glass sheet or sheets while the local heating is provided to raise the temperature of the glass sheets or sheets further at the heating zone(s) at and/or near the area where the edge sealing is to be provided and/or has been provided.

In one or more aspects of the present disclosure, the first and/or second glass sheets may be pre-heated by the further heating arrangement to a temperature between 50°C and 400°C, such as between 290°C and 350°C by means of the further heating arrangement. This temperature range may be advantageous, e.g. if the glass sheets are made from tempered glass such as thermally tempered glass to avoid de-tempering of the glass sheet.

In one or more aspects of the present disclosure, the glass material may be heated to a temperature between 350°C and 550°C, such as between 385°C and 460°C by means of one or more heating arrangements, and applied at substantially that temperature.

This temperature range may be suitable for solder glass material such as low melting temperature solder glass materials.

In one or more aspects of the present disclosure, the glass material for the edge sealing may be a devitrifying solder glass material that may be heated to a temperature between 350°C and 550°C, such as between 385°C and 460°C without crystalizing.

According to the invention, the glass material to be applied is heated to a temperature above 300°C by means of one or more heating arrangements, and applied at substantially that temperature.

In one or more aspects of the present disclosure, the glass material to be applied may be heated to a temperature above 400°C, e.g. above 500°C by means of one or more heating arrangements, and applied at substantially that temperature.

In one or more aspects of the present disclosure, the heated glass material may be an amorphous glass material.

The heated glass material may be kept in an amorphous state when heated and applied, as this may e.g. provide a strong edge sealing compared to an edge sealing in a crystalline state which may suffer from higher material permeation rate issues.

In one or more aspect, the glass material comprises a solder glass material component herein also called a glass solder frit material component.

In one or more aspects of the present disclosure, the heated glass material may be a solder glass material, such as a low melting temperature solder glass material herein also called a low melting point glass solder frit material.

In one or more embodiment, the low melting point glass solder frit material comprising the following ingredients: tellurium dioxide, divanadium pentaoxide, aluminium oxide in glasses/pigments and manganese dioxide. The concentrations of the ingredient may be 30-50 % (w/w) tellurium dioxide, 20-30 % (w/w) divanadium pentaoxide, 5-10 % (w/w) aluminium oxide in glasses/pigments and 1-5 % (w/w) manganese dioxide.

In one or more embodiments the glass material comprises less than 0.1% (w/w) lead.

In aspects of the present disclosure, the solder glass material may be a lead free solder glass material.

In one or more aspect, the glass solder frit material component comprises at least one oxide selected from vanadium oxide, barium oxide, zinc oxide, bismuth oxide, aluminum oxide, silicon oxide, magnesium oxide, chromium oxide, iron oxide, cobalt oxide, sodium oxide, manganese oxide, tantalum oxide, molybdenum oxide, niobium oxide, tellurium oxide, or any combinations of one or more thereof.

For example it may be a vanadium-tellurium oxide solder glass material. Use of low melting temperature solder glass material may e.g. provide a benefit when used on tempered, such as thermally tempered, glass sheets, as it may reduce the risk of de-tempering the glass sheets.

In aspects of the present disclosure, the solder glass material may be
- a solder glass material as disclosed in one or more of the embodiments of e.g. paragraphs [0020] to (and including)[0089] of US 2017/0243995 A1,
- A solder glass material as disclosed in one or more of the embodiments of e.g. paragraphs [0071] to (and including)[0074] of US 2017/0203997 A1 and/or
- A solder glass material as disclosed in one or more of the embodiments of e.g. paragraphs [0013] to (and including)[0046] of WO 2016/123273 A1.

This may however be without use of binder and solvent material mixed with the glass material to provide a glass frit paste.

The solder glass material, may e.g. be an oxide solder glass material.

In one or more aspects of the present disclosure, said glass material may be a glass powder material, such as an amorphous glass powder material, that is heated and melted by means of a first heating arrangement before it is applied.

This may provide that the glass material so to say flow together due to the softening and sinter and/or or melts together before it leaves the outlet to be supplied to the glass sheet.

In one or more aspects of the present disclosure, the height of the applied heated glass material may be between 0.10mm and 0.7mm, such as between 0.10mm and 0.55mm, e.g. between 0.15mm and 0.5mm, such as between 0.19mm and 0.3mm, such as between 0.10mm and 0.3mm.

This may provide a solution where a sufficient and still controlled amount of heated glass material may be added for the edge sealing while it still may be kept narrow, at least before deformation in aspects where the glass sheets are paired subsequently.

The height may be measured perpendicularly from a surface which is applied with the heated glass material, such as e.g. perpendicularly to a major glass sheet surface supplied with the heated glass material for the edge sealing.

In one or more aspects of the present disclosure, the temperature difference between the temperature of the first glass sheet at said locally heated zone at the area where the heated glass material is applied, and the temperature of the applied, heated glass material is less than 310°C, such as less than 200°C, such as less than 100°C, e.g. as less than 50°C, such as less than 25°C when the heated and softened glass material is applied.

This temperature difference may be measured substantially when or after the heated glass material is applied. One way of measuring the temperature is to determine the estimated temperature of the heated glass material by a temperature measurement arrangement such as a resistance thermometer or an infrared thermometer, and at substantially the same time either measure the temperature at the locally heated zone by means of for example an infrared thermometer arranged to determine the glass sheet's surface temperature in the zone.

The temperature difference may e.g. in one or more aspects of the present disclosure be within the range of 10°C and 350°C such as between 50°C and 200°C, e.g. between 75°C and 150°C.

In one or more aspects of the present disclosure, the temperature difference between the first glass sheet at said locally heated zone at the area where the heated glass material is applied, and the temperature of the applied, heated glass material may be more than 70°C, such as more than 80°C, e.g. more than 150°C such as more than 200°C, for example more than 250°C while the heated glass material is applied.

In one or more aspects of the present disclosure, said glass material may be substantially free from binder material and/or solvent material before the heating to heat and soften the glass material. In one example, the glass material comprises less than 1% solvent. In one example, the glass material comprises less than 1% binder.

When using conventional solder glass material for an edge sealing for a VIG unit, this may comprise first applying the solder glass material mixed with binder and solvent in a paste form onto a glass sheet. An example of these may be Propylene glycol diacetate as solvent and Poly(propylene carbonate) as binder, or any other suitable type of binder and/or solvent. The solvent then needs to be evaporated and the binder needs to be removed by burning out the binder material, and this (e.g. the binder) may generate carbon residues, e.g. CO2 gaseous inclusions, in the edge seal. The solder glass material is then heated further to soften the solder glass material and make it bind to the glass sheet surfaces for the glass sheets/panes of the VIG unit assembly. Then the solder glass material is cooled, and the gap is evacuated by an evacuation cup or an evacuation compartment containing the entire VIG assembly and the gap between the glass sheets is then sealed to keep the gap evacuated.

The process of evaporating the solder material and/or burning out the binder material is however a time consuming process which may provide a longer manufacturing time to provide a VIG unit, which is naturally undesired. Moreover or alternatively, it may add contaminates to the edge sealing if not removed completely, which over time may enter into the evacuated gap of the VIG unit, and unintentionally raise the pressure in the gap, thereby reducing the insulating properties of the VIG. By omitting or at least reducing the content of binder and/or solvent, the step of evaporating the solvent and/or removing the binder after the solder glass material has been applied onto the glass sheet(s) may be omitted as the glass material is provided in a state substantially free from solvent and binder material. This may also cause a more dense edge seal as e.g. carbon residues caused by binder and/or solvent may not be contained in the edge seal.

It is however understood that in one or more further aspects of the present disclosure, the binder and solvent may be mixed with the glass material, and this may then be heated so as to provide said heated and softened glass material, and to evaporate binder and solvent before it is extruded to provide the edge sealing.

In one or more aspects of the present disclosure, said heated and softened glass material may comprise at least 30wt% soda lime glass, such as at least 40wt% soda lime glass, such as at least 50wt% soda lime glass, such as at least 60wt% soda lime glass, such as at least 70wt% soda lime glass. In one or more aspects of the present disclosure, said heated and softened glass material may comprise at least 85wt% soda lime glass, such as at least 90wt% soda lime glass, for example at least 95wt% soda lime glass such as at least 99wt%, for example at least 99.5wt% soda lime glass.

An edge sealing having a high amount of soda lime glass may comprise one or more advantages, e.g. it may be considered a cost efficient edge seal material and/or may have good properties, such as thermal expansion properties that may be useful when compared to the properties of the glass sheet or sheet.

In one or more aspects of the present disclosure, said glass material to be heated and softened may comprise glass material and filler material such as ceramic filler material for e.g. matching the glass material of the glass material with thermal expansion properties of the glass sheet or sheets.

In one or more aspects of the present disclosure, a temperature control arrangement control a heating arrangement so as to keep the nozzle temperature variation less than ±10°C, e.g. less than ±5°C, such as e.g. less than ±3°C while the heated glass material is supplied through the dispensing nozzle.

Generally, having a low temperature variation on the heated and softened solder glass material may help to provide a more controlled flow of heated and softened glass material, and/or may help to provide a more even height of the applied glass material.

In one or more aspects of the present disclosure, said glass material may be a glass material powder that may be compressed in a storage by means of a gas, e.g. an inert gas, for example a nitrogen or argon gas, and/or by means of a mechanical pressure device.

In one or more aspects of the present disclosure, said glass material to be heated may be a glass material powder, and a vibration mechanism may vibrate the glass material powder, such as before the glass material powder is heated.

In one or more aspects of the present disclosure, the cross sectional area of the nozzle outlet may be between 0.2mm² and 4mm², such as between 0.4mm² and 2mm², preferably between 0.6mm² and 1.4mm²

In one or more aspects of the present disclosure, said heating of the glass material to soften the glass material may be provided in a guiding tube by means of a heating arrangement, such as during a continuous flow/supply of glass material towards the outlet of a nozzle.

In one or more aspects of the present disclosure, said heating of the glass material, a glass powder or the like, to soften the glass material, may be provided in a guiding tube by means of a heating arrangement during a substantially continuous supply of glass material from the glass filament, glass powder, and towards a dispensing outlet of a nozzle to extrude the glass material.

This may e.g. provide a precise control of heated glass material towards the nozzle outlet and/or may provide a solution which may be especially suitable for larger scale manufacturing of VIG units.

In one or more aspects of the present disclosure, the method may comprise
- applying the heated, softened glass material to one or more glass sheets by means of at least one dispensing nozzle to provide an edge sealing for a vacuum insulated glass unit,
- subsequently pairing the second glass sheet with the first glass sheet while the heated glass material still is in a softened condition due to said heating,

wherein support structures are distributed between the glass sheets to maintain a gap between the glass sheets, and
wherein the applied, heated glass material prior to said pairing may have a first height which is larger than the height of the support structures, and wherein said applied, heated glass material is deformed during or after the pairing of the glass sheets.

This may e.g. help to provide a fast and simple manufacturing of VIG units, where a controlled and reliable applying of heated glass material to form an edge sealing may be provided, which may help to provide an improved solution for a larger scale manufacturing solution, and at the same time provide a strong edge sealing.

In one or more aspects, the glass material - after being provided to the one or more glass sheets (1a, 1b) - is re-heated to re-soften said glass material, such as during a reduced pressure in a vacuum chamber.

In one or more examples, the pre-heating and applying of the glass material is conducted at atmospheric pressure. Independently of which pressure the pre-heating and applying is conducted at, the glass material can be outgassed during the pre-heating process resulting in a dense glass material, which can subsequently be heated in a heating step in a vacuum chamber without foaming, or it may be reheated before entering the vacuum chamber. The glass material may be further densified by subjecting it to an increased pressure in a vacuum chamber.

The re-heating may provide a re-softening of the applied glass frit powder material that was initially applied in a heated and softened state for the edge seal. After the material has been applied it may be allowed to cool down and hereby harden. The re-heating provides that at least a part of the edge seal material is re-softened by means of the at least one heat source, and hence provides a melting/fusing operation that provides and/or ensures a sufficiently strong and air-tight edge seal material bonding to the glass sheets after cool down of the edge seal. The re-heating may provide that only an outer "shell" part of the edge seal softens to bond to one or both glass sheets, or it may provide that substantially the entire edge seal material is re-heated by the heat source and hence is softened, e.g. until it is melted. The re-heating may generally provide that the temperature of the edge seal material is raised above a rated glass transition temperature Tg of the glass frit powder material that is a temperature parameter for glass frit defining a temperature at which the glass structure changes.

In one or more examples, the paring of the first glass sheet and the second glass sheet is conducted under pressure in a vacuum chamber.

In one or more examples, the pressure in the vacuum chamber is no higher than 0.001 mbar, such as no higher than 0.0005 mbar, such as no higher than 0.0001 mbar. This may be the case when the VIG unit gap is sealed.

In one or more examples, the pressure in the sealed cavity between the two glass sheets is no higher than 0.001 mbar, such as no higher than 0.0005 mbar, or such as higher than 0.0001 mbar.

Generally, by pre-heating the glass material forming the edge sealing the, glass material may foam and densifies to form a dense glass material, which entails that the gaseous inclusions from the glass material has outgassed. During the following heating in a vacuum chamber the glass material will not foam since the glass material is already outgassed and dense.

If the joining of the first glass sheet with another second glass sheet to form a VIG unit is conducted in vacuum chamber, the glass material might not foam since the glass material is already outgassed and dense, which means that the two glass sheets can be completely joined and that the space located between the two glass sheets can be fully evacuated.

By the above is obtained a glass material, which can be heated in a heating step without foaming, which significantly eases production of VIG units. Formation of crystalline glass structures caused by foaming during sealing of the two glass sheets, are also avoided. This can provide a stronger seal between the two glass sheets.

In another aspect not forming part of the present invention, the present disclosure relates to a vacuum insulated glass unit comprising:
at least two thermally tempered glass sheets separated by a gap,
a plurality of support structures distributed in said gap between said glass sheets, and an edge sealing of a glass material configured to seal said gap, and wherein said gap is evacuated to reduce the pressure in the gap,
wherein one or more of said tempered glass sheets of said VIG unit comprises a zone at and/or near said edge sealing having a reduced stress compared to the stress in an area of the glass sheet at and/or near the centre of the glass sheet.

The reduced stress may e.g. be obtained due to that a heated and softened glass material has been applied as edge sealing at a temperature that may at least partly reduce the stress, such as compressive stress, at the zone where it is applied, before it cools. Also or alternatively, a reduced stress may be provided due to a local heating of the zone before or after the edge sealing has been applied.

In one or more aspects of the present disclosure, the edge seal may however provide a sufficient support area along the edges so that the reduced tension of the glass sheets at and/or near the edge sealing may be accepted. Such a VIG unit may e.g. be fast and/or cost efficiently to manufacture, and still it may provide a desired strength in the area of the support structures.

Hence, in one embodiment, the zone at and/or near said edge sealing having a reduced stress is located at the surface of the one or more of said tempered glass sheets being in direct contact with the edge sealing.

The stress measurement may e.g. be determined by means of a Scalp (Scattered Light Polariscope) for determining stress parameters such as stress distribution of a glass sheet.

The compressive stress and/or tensile stress in the thermally tempered glass sheet may be changed so that the stress is reduced when applying the heated and softened glass material and/or when locally heating the edge zone of the glass.

In one or more aspects, the part tempered glass sheet(s) opposite to and facing away from the edge sealing, at said zone, has a compressive stress provided due said thermal tempering, where said compressive stress is higher than the compressive stress in the part of the tempered glass sheet which is proximate the surface in contact with the edge sealing.

The edge seal may have reduced the compressive stress in the surface of the glass sheet facing the edge seal, as the edge seal is applied in heated state and hence may at least partly de-temper the surface area at and possibly also near the edge seal. The other major surface of the glass sheet facing away from the edge seal, and which is opposite to the edge seal and the part of the surface attached to the edge seal, may though not be de-tempered to the same degree, and may hence maintain at least a part of the compressive stress induced during the thermal tempering of the glass sheet. Generally, the reduced stress may provide that the zone at and/or near said edge sealing is at least partly annealed, such as fully annealed.

However, it is understood that in one or more aspects, the zone at and/or near the edge sealing having a reduced stress may comprise that both parts/sides of the glass sheets that initially comprises a compressive stress due to the thermal tempering may be reduced in stress due to a heating of the glass sheet during manufacturing, compared to the stress in an area of the glass sheet at and/or near the centre of the glass sheet.

In one or more embodiments of the VIG unit, the glass material comprises less than 0.1% lead.

In one or more embodiments of the VIG unit, the glass material comprises a glass solder frit material component. The glass solder frit material component may comprise at least one oxide selected from vanadium oxide, barium oxide, zinc oxide, bismuth oxide, aluminum oxide, silicon oxide, magnesium oxide, chromium oxide, iron oxide, cobalt oxide, sodium oxide, manganese oxide, tantalum oxide, molybdenum oxide, niobium oxide, tellurium oxide, or any combinations of one or more thereof.

In one or more embodiments, the glass solder frit material component is a low melting point glass solder frit material.

In one or more embodiments of the VIG unit, the glass material comprises less than 1% solvent.

In one or more embodiments of the VIG unit, the glass material comprises less than 1% binder.

In one or more embodiments of the VIG unit, the glass material comprises a soda lime glass component.

In one or more aspects of the present disclosure, said edge sealing of the vacuum insulated glass unit comprises at least 30wt% soda lime glass, such as at least 40wt% soda lime glass, such as at least 50wt% soda lime glass, such as at least 60wt% soda lime glass, such as at least 70wt% soda lime glass. In one or more aspects of the present disclosure, said edge sealing of the vacuum insulated glass unit comprises at least 85wt% soda lime glass, such as at least 90wt% soda lime glass, for example at least 95wt% soda lime glass such as at least 99wt% soda lime glass.

In one or more embodiments of the present disclosure, the glass material (5) is heated to a temperatureabove 300°C, such as between 350°C and 550°C, such as between 385°C and 460°C by means of one or more heating arrangements (4,7), and applied at substantially that temperature (T2).

In one or more aspects of the present disclosure, said edge sealing of the vacuum insulated glass unit bond to an end edge surface of a first glass sheet of the VIG unit, and to a surface of the other glass sheet extending beyond the end edge surface of the first glass sheet due to a stepped edge configuration.

In one or more aspects of the present disclosure, said edge sealing of the vacuum insulated glass (VIG) unit bond to an end edge surface of a first glass sheet of the VIG unit, and to a surface of the other glass sheet extending beyond the end edge surface of the first glass sheet, e.g. due to a stepped edge configuration. In one or more aspects, said surface of the other glass sheet is a major surface of the glass sheet.

In one or more aspects of the present disclosure, said edge sealing of the vacuum insulated glass (VIG) unit extend more than 2mm such as more than 4 mm, e.g. more than 6 mm such as more than 10 mm into said gap between the glass sheets.

In one or more aspects of the present disclosure, said heated and softened glass material may extend between 2mm and 30mm, such as between 2 and 15mm, e.g. between 2 and 8mm such as between 3 and 6 mm into the gap 13.

In one or more aspects of the present disclosure, said edge sealing of the vacuum insulated glass (VIG) unit has been applied by a heated and softened glass material extruded by a nozzle, during manufacturing of said VIG unit.

In one or more aspects of the present disclosure, said glass sheet or sheets of the vacuum insulated glass (VIG) unit may comprise a zone at and/or near said edge sealing having a reduced tension compared to the tension in an area of the glass sheet at and/or near the centre of the glass sheet.

In one or more aspects of the present disclosure, said glass sheet or sheets of the vacuum insulated glass (VIG) unit may be tempered, such as thermally tempered glass sheets comprising a zone at and/or near said edge sealing that is at least partly annealed, such as fully annealed.

In one or more aspects of the present disclosure, said vacuum insulated glass unit may be placed in a covering frame, for example so as to provide a window, such as a roof window, for covering an aperture of a building.

In one or more aspects of the present disclosure, said vacuum insulated glass (VIG) unit has/have been manufactured by means of the method disclosed herein.

In a further aspect not forming part of the present invention, the present disclosure relates to a system for providing a an edge sealing of a glass material in the process of providing a glass sheet assembly for a vacuum insulated glass unit comprising paired glass sheets separated by support structures maintaining a gap between said paired glass sheets, wherein said system comprises
a transportation arrangement for providing one or more tempered glass sheets,
one or more heaters/heating arrangements for heating a glass material to soften the glass material,
one or more nozzles for applying the heated, softened glass material at said one or more glass sheets to provide an edge sealing for sealing the gap between the paired glass sheets. The system may moreover comprise one or more heaters configured to locally heat a zone of said tempered glass sheet or sheets where the heated, softened glass material is applied, so as to increase the temperature of said zone compared to the surrounding part of the glass sheet or sheets.

In one or more aspects, one or more of said one or more heaters may be configured to locally heat a zone comprises a radiation heater such as an electromagnetic radiation heater.

In one or more aspects, said one or more radiation heaters may be configured to emit electromagnetic radiation in the range of 300-4000 nm such as in the range of 600-2000 nm, e.g. in the range of 1000 nm - 1100 nm.

In one or more aspects, said one or more radiation heaters may comprise a laser for example emitting light, where the light from the laser is arranged to aim towards the zone of the one or more glass sheets to be heated.

In one or more aspects, said system may be configured to operate according to the method as disclosed herein, and/or to provide a VIG unit as disclosed herein.

In a further aspect not forming part of the present invention, the present disclosure relates to a Vacuum insulated glass unit manufactured by means of a method according to the disclosure and/or according to any of claims.

### Figures

Aspects of the present disclosure will be described in the following with reference to the figures in which:
- fig. 1a-1c: : illustrates an arrangement and method of providing edge sealing material according to one or more embodiments of the present disclosure,
- fig. 2: : illustrates embodiments of the present disclosure wherein an applied edge sealing material has a height,
- fig. 3: : illustrates embodiments of the present disclosure wherein an edge sealing is deformed by means of evacuating a gap between glass sheets,
- fig. 4: : illustrates further embodiments of the present disclosure,
- figs. 5 and 6: : illustrates schematically embodiments of the present disclosure wherein a pressure arrangement provides a pressure to force heated glass material out of a nozzle outlet,
- fig. 7.: : illustrates a batch solution according to embodiments of the present disclosure,
- fig. 8: : illustrates embodiments of the present disclosure where a pressure control arrangement is utilized,
- fig. 9: : illustrates embodiments of the present disclosure comprising a temperature control arrangement,
- fig. 10: : illustrates schematically embodiments of the present disclosure wherein a glass sheet is pre-heated,
- figs. 11-13: : illustrates various embodiments of the present disclosure wherein glass sheets have been paired before heated glass material is applied to provide an edge sealing
- fig. 14: : illustrates schematically an embodiment of the present disclosure wherein a clamping arrangement provides a compression force,
- fig. 15: : illustrates embodiments of the present disclosure wherein a dispensing nozzle is heated by means of a nozzle heating arrangement,
- fig. 16: : illustrates further embodiments of the present disclosure wherein a pressure arrangement extrudes heated glass material for a VIG edge sealing,
- fig. 17: : illustrates a nozzle according to embodiments of the present disclosure
- fig. 18: : illustrates a VIG unit made from a glass sheet assembly provided in accordance with embodiments of the present disclosure,
- fig. 19: : illustrates a building seen from the outside/exterior, comprising VIG units made from a glass sheet assembly provided in accordance with one or more embodiments of the present disclosure,
- fig. 20: : illustrates a system for providing an edge sealing for a VIG unit according to various embodiments of the disclosure,
- fig. 21: : illustrates an embodiment of a viscosity curve for an edge sealing glass material according to embodiments of the present disclosure,
- figs. 22a-22e: : illustrates changing geometric shape of an edge sealing glass material due to viscosity change, when heated, according to embodiments of the present disclosure,
- Fig. 23: Fig. 23 schematically illustrates embodiments of the present disclosure wherein one or more heaters 50 locally heats a zone 52 of a tempered glass sheet
- Figs. 24a 24c: illustrates embodiments of the present disclosure where a heater for providing local heating at the location for an edge sealing comprises a conduction heating unit,
- Fig. 25a-25c: illustrates embodiments of the present disclosure, where radiation heaters heats a zones of a VIG unit assembly comprising paired glass sheets,
- Fig. 26: illustrates embodiments of the present disclosure, where a radiation heater heats a layer arranged at a surface of a glass sheets,
- Fig. 27a-27b: illustrates further embodiments of local heating according to embodiments of the present disclosure,
- Fig. 28: illustrates embodiments of the present disclosure, wherein a local heating of one or more zones is provided by means of convection heating
- Fig. 29: illustrates embodiments of the present disclosure, wherein a heat shield is used,
- Fig. 30: illustrates embodiments of the present disclosure wherein a local heating is provided prior to applying heated., softened glass material for an edge seal,
- Fig. 31: illustrates embodiments of the present disclosure, wherein local heating of a zone is provided after heated, softened glass material for an edge sealing of a VIG unit is applied,
- Fig. 32: illustrates embodiments of the present disclosure, where local heating of a zone is provided both prior to and after applying heated, softened glass material for an edge sealing,
- Fig. 33: illustrates schematically and in perspective an edge zone that may be heated locally in accordance with one or more embodiments of the present disclosure,
- Fig. 34a-34c: illustrates schematically embodiments of the present disclosure wherein heated and softened glass material is applied to a VIG unit assembly in a stepped edge configuration, and

### Detailed description

In relation to the figures described below, where the present disclosure may be described with reference to various embodiments, without limiting the same, it is to be understood that the disclosed embodiments are merely illustrative of the present disclosure that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for e.g. teaching one skilled in the art to variously employ the present disclosure.

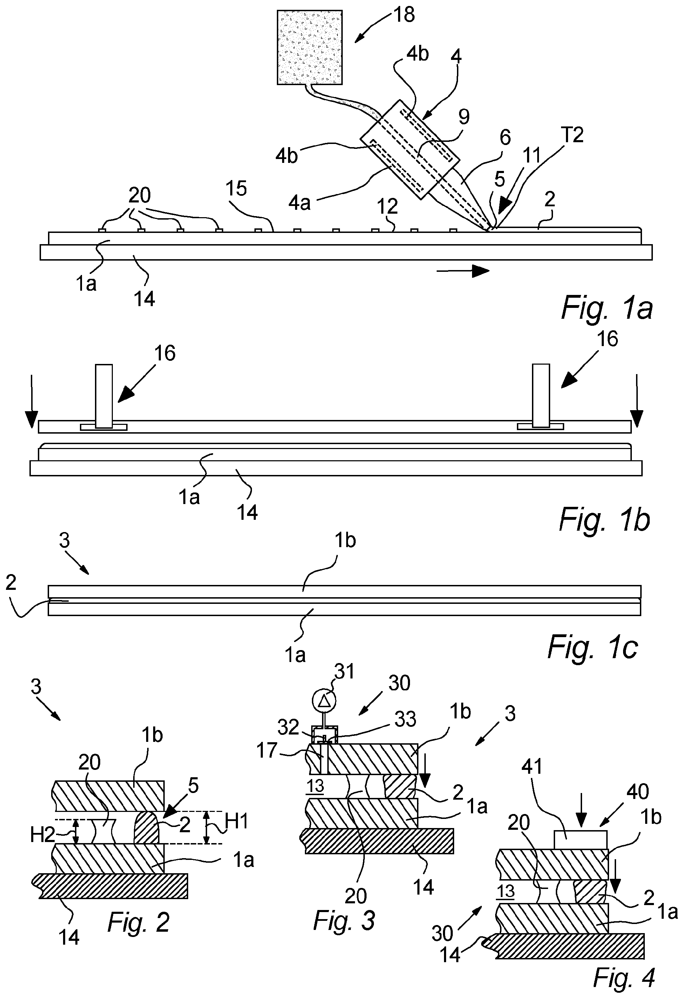

Fig. 1a illustrates schematically an arrangement and method of providing edge sealing material at a glass sheet 1a for a Vacuum Insulated Glass (VIG) unit.

A glass sheet 1a is arranged substantially horizontally, e.g. on a support surface 14.

The glass sheet 1a may in one or more embodiments of the present disclosure be a tempered glass sheet such as a thermally tempered glass sheet.

A dispensing nozzle 6 applies strips of a glass sealing material 5, onto an upwardly facing surface 15 of the first glass sheet 1b. The glass material 5 is heated by means of a first heating arrangement 4 so as to soften the glass material 5, and is applied to a major surface 12 of the glass sheet 1a to provide a an edge sealing material for a vacuum insulated glass (VIG) unit.

The glass material 5 may leave the nozzle outlet by gravity, but in other embodiments of the present disclosure, as described in more details later on, the glass material 5 may in further embodiments of the present disclosure be forced through the dispensing nozzle 6 outlet 11 by means of a pressure arrangement.

The dispensing nozzle 6 may e.g. be made from a metal material such as aluminium, or other suitable kinds of material that may e.g. have good heat conductive properties.

Generally, the heated glass material 5 may in one or more aspects of the present disclosure be an amorphous glass material 5 that is maintained in an amorphous state after it has been heated to soften, applied to provide the edge sealing and then cooled.

The first heating arrangement 4 comprises a heat capacity element 4a arranged to store heat provided by one or more heaters 4b, and the heat capacity element 4a is configured to abut or provide a guiding tube 9 so as to transfer heat to the glass material to soften the glass material 5, e.g. to a melting point temperature of the glass material.

The heater or heaters 4b may in one or more embodiments of the present disclosure comprise one or more electric heater elements, but other types of heating arrangements may also or alternatively be used in further embodiments of the present disclosure, such as e.g. induction heating, heating by laser and/or the like.

The heat capacity element 4a may have a mass and heat transfer capabilities that help to provide a low temperature variation during heating and softening the glass material 5 and assure a good heat transfer to the glass material to be heated. It is generally, however, understood that the heat capacity element 4a may be omitted in further embodiments of the present disclosure, dependent e.g. on the heating capability of the heater 4b.

The heated glass material 5 may in one or more embodiments of the present disclosure be a solder glass material, such as a low melting point solder glass material such as an oxide solder glass material comprising one or more additives such as Vanadium and/or tellurium or the like arranged to decrease the melting point temperature of the glass material. The glass material may comprise less than 0.1% lead.

In other embodiments, the heated glass material 5 may comprise a soda-lime glass material component having a high melting point temperature such as between 550-700°C. The glass material 5 may here be heated to a softened condition, but kept in an amorphous state so that it maintain amorphous after it has been applied and cooled.

It is generally understood that in one or more embodiments of the present disclosure, the glass material 5 may be heated to a temperature T2 between 350°C and 550°C, such as between 385°C and 460°C by means of the first heating arrangement 4, and applied at substantially that temperature. However, it is understood that the temperature T2 may be lower than 350°C dependent of the glass material 5 type, such as low melting point solder glass.

In one or more embodiments of the present disclosure, wherein a temperature control arrangement (no illustrated) may control the viscosity/softness with which the glass material is applied by controlling the first heating arrangement 4.

The edge sealing glass material 5 is supplied during a relative displacement between the glass sheet 1a and the nozzle 6, e.g. by moving the support base/surface 14, and the outlet 11 for the heated glass material 5 while keeping the nozzle 6 and the outlet 11 in a fixed position.

The support surface 14 may be part of or provided by a transportation arrangement such as a conveyer solution comprising a conveyer belt, e.g. with a flat and hard surface arranged below the conveyer belt, it may alternatively comprise rollers for supporting the glass sheet while the glass material 5 is applied and/or the like.

The glass sheet 1a may in one or more embodiments of the present disclosure be rotated (not illustrated in fig. 1a) in the horizontal plane after first strips of heated glass material is supplied along parallel edges of the glass sheet 1b by first dispensing nozzles 6, before further strips of softened glass material is supplied along other parallel edges of the glass sheet 1a by e.g. further nozzles or the same dispensing nozzles 6.

As illustrated in fig. 1b, after the heated and thereby softened glass material 5 has been applied along the edges of the glass sheet to provide an edge sealing material by the dispensing nozzle or nozzles 6, a second glass sheet 1b is subsequently paired with the first glass sheet 1a while the heated glass material 5 is still softened due to the heating, thereby sealing a gap between the glass sheets.

It is understood that support structures (not illustrated in figs 1a-1c), such as support pillars, are distributed between the glass sheets 1a, 1b to maintain a gap between the glass sheets 1a, 1b when the gap 13 is evacuated.

This glass sheet pairing process may e.g. be provided by automation equipment 16 such as one or more gripping arrangements 16 controlled by a control arrangement (not illustrated) which are able to hold the second glass sheet 1b and lower it onto the first glass sheet so that it supports on the edge sealing 2 and possibly also support structures 2) (not illustrated in figs 1a-1c).

After this, the glass sheet assembly 3 as shown in fig. 1c may be cooled to harden the edge sealing 2.

The glass material heated by the heating arrangement may in one or more in one or more aspects of the present disclosure be a glass powder material stored in a storage 18, and supplied to the heating arrangement 4 to be heated and softened before it is applied through the outlet 11. In other embodiments, it may be a glass filament.

Fig. 2 illustrates schematically one or more embodiments of the present disclosure wherein the applied edge sealing material 5 has a height which is larger than the height of the support structures 20 in the gap 13.

The distance between the glass sheets 1a, 1b in the gap may be between 0.1 and 0.4mm such as around 0.2mm.

The applied, heated glass material 5 has a viscosity due to said heating of the glass material 5 which provides that it has a height H1 which is larger than the height H2 of support structures 20 placed in between the gap 13 of the glass sheet assembly 3.

The height H1 may in embodiments of the present disclosure be at last two times the height H2, such as at least three times the height H2. The height H2 may e.g. be about 0.2 mm. In one or more embodiments of the present disclosure, the height H1 about the same as the distance between the major surfaces of the glass sheets 1a, 1b facing the gap.

The Height H1 may in embodiments of the present disclosure be between 0.2mm and 2mm, such as between 0.3mm and 1mm, e.g. between 0.4 and 0.7.

In one or more embodiments of the present disclosure, the height of the applied heated glass material may be between 0.10mm and 0.7mm, such as between 0.10mm and 0.55mm, e.g. between 0.15mm and 0.5mm, such as between 0.19mm and 0.3mm.

The heated glass material 5 is then deformed during or after the pairing of the glass sheets 1a, 1b.

Fig. 3 illustrates schematically one or more embodiments of the present disclosure wherein the edge sealing 2 is deformed by means of evacuating the gap 13 between the glass sheets 1a, 1b. An evacuation cup 30 encloses an evacuation opening 17 in the upper glass sheet 1b, and a pump 31 connected to the evacuation cup 30 evacuates the gap 13 through the evacuation opening 17. An evacuation tube 32 is then sealed by means of e.g. heating (not illustrated), or the evacuation opening 17 may be sealed in other ways. A solder glass material 33 may provide sealing between the tube 32 and glass sheet 1b.

The evacuation of the gap 13 may be started while the edge sealing is still soft due to the heating to soften the glass material 5, this may force the glass sheets 1a, 1b towards each other, thereby deforming the edge sealing 2 until the glass sheets 1a, 1b support on the support structures 20.

Fig. 4 illustrates schematically one or more embodiments of the present disclosure, wherein the edge sealing 2 is deformed by means of a clamping arrangement 40 comprising a clamping part 41 which provides a compression force on the glass sheets 1a, 1b, thereby deforming the edge sealing.

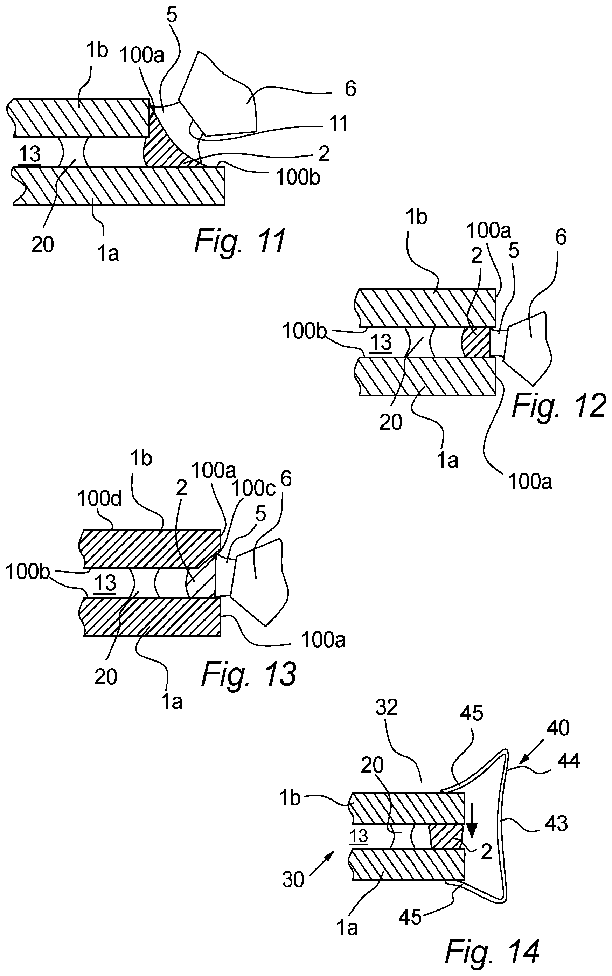

The clamping part 41 may in further or alternative embodiments of the present disclosure be kept in place during hardening of the edge sealing 2, see also fig. 14. The clamping part 41 may here provide that the edge of the upper glass sheet 1b is pressed towards the edge sealing 2, and as the lower glass sheet 1a support on the support 14, a compression force is provided on the edge sealing 2 between the glass sheets 1a, 1b.

The clamping part may e.g. be controlled by automation equipment (not illustrated) such as an actuator, e.g. a linear actuator controlled by an electric motor, a pneumatic system or the like.

The deforming of the edge sealing may however in further embodiments of the present disclosure (not illustrated), dependent on the viscosity of the edge sealing 2 and the weight of the glass sheet 1b, be obtained when the glass sheets 1a, 1b are paired by the glass sheet 1b acting on the edge sealing 2 by means of gravity.

The temperature difference between the temperature of the first glass sheet 1b and the temperature of the applied, heated glass material 5 may in one or more embodiments of the present disclosure be less than 200°C, such as less than 150°C, e.g. less than 110°C, such as less than 90°C when the heated glass material 5 is applied.

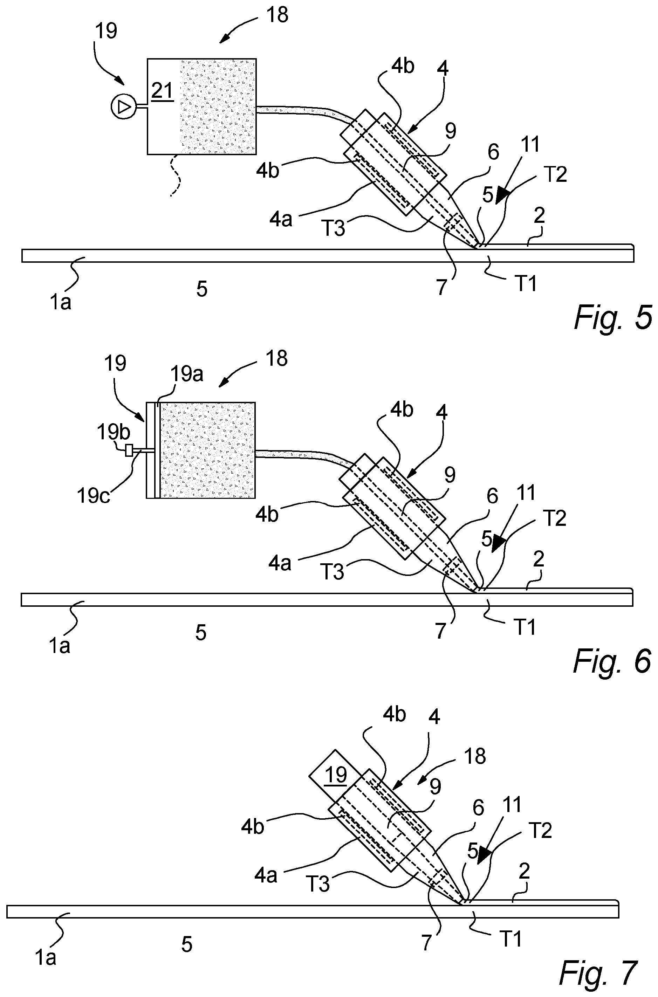

Figs. 5 and 6 illustrates schematically one or more embodiments of the present disclosure wherein a pressure arrangement 19 provides a pressure on the solder glass material 5 to force it out of a nozzle 6 outlet 11.

In fig. 5, the pressure arrangement 19 provides a pressure on the content of glass powder storage 18. In the present embodiment, the pressure arrangement 19 comprises a pump 21 arranged to pressurize the content, such as glass powder/granules, of the storage 18 by means of a gas 21such as an inert gas, e.g. a nitrogen or argon gas, and the pressurized gas forces the glass powder towards the heating arrangement 4 to be heated and therefrom through the dispensing nozzle outlet 11.

The gas may in one or more aspects of the present disclosure so to say "flush" the glass material to be heated, e.g. a glass powder.

In fig. 6, the pressure arrangement 19 comprises a mechanical pressure arrangement having a displaceable member 19a such as a plate, piston or the like arranged to provide a pressure to the content of the storage 18. A drive arrangement 19b such as an electric motor, a pneumatic or hydraulic arrangement and/or the like act on the displaceable member 19a to force the content of the storage 18 towards the outlet 11.

The pressure arrangement 19 may comprise one or more actuators 19c such as a linear actuators, e.g. a threaded screw shaft actuator solution to be rotated by the drive arrangement 19b, for displacing the member 19a when operated. It is however understood that the pressure arrangement may comprise any suitable type of pressure arrangement 19 enabling a pressure on the glass material to force heated and softened glass material 5 out of the nozzle outlet 11.

The heating of the glass material 5 to soften the glass material 5 may in embodiments of the present disclosure be provided in a guiding tube 9 by means of the first heating arrangement 4 during a continuous flow of glass material such as glass powder from the storage 18 towards the dispensing outlet 11. The pressure arrangement 19 may thus press the glass powder into the guiding tube 9.

Generally, it is understood that the pressure arrangement 19 may provide a pressure between 0.1 and 6 bar, such as between 0.4 and 4 bar, e.g. between 0.2 to 2 bar to the heated, softened glass material so as to force it through the outlet.

In one or more embodiments of the present disclosure, the pressure arrangement 19 may provide a compression arrangement. The compression arrangement may be used for compressing the glass material powder before it is heated and softened. The compressed glass material powder is then subsequently heated to soften the glass material, and is then applied to provide an edge sealing for sealing the gap 13 between paired glass sheets.

The compression arrangement may in one or more embodiments of the present disclosure compress the glass powder by means of a gas 21 such as a nitrogen or argon gas, and/or by a mechanical pressure device 19a.

In one or more embodiments of the present disclosure (not illustrated), the glass powder may be vibrated by a vibrating mechanism to compact the powder before it is forced towards a heater 4 and the nozzle 6.

The vibrating mechanism may in one or more embodiments be generated by an electric motor with an unbalanced mass/weight on its driveshaft, it may be provided by one or more reciprocating linear actuators and/or the like. The vibrating mechanism may e.g. be connected to the storage 18 and shake/vibrate this, thereby vibrating the powder. The vibration mechanism may in one or more embodiments of the present disclosure be configured to vibrate the powder with an oscillation/vibration frequency between 3Hz and 10kHz, such as between 10 Hz and 1kHz, e.g. between 50Hz and 500 Hz.

In fig. 7, a batch process solution according to embodiments of the present disclosure is schematically illustrated. The heating arrangement 4 heats the glass material 5 in the storage 18, and the heated and softened glass material 5 is subsequently pushed by a pressure arrangement 19 such as an arrangement described in relation to fig. 5 or 6, through the nozzle outlet 11 when the desired temperature T2 is reached and a glass sheet 1a is present.

The storage 18 as disclosed in relation to figs 5 and 6 contains glass powder/granular to be supplied to a heating arrangement 4 to be continuously heated, and thereafter to the nozzle 6 by the pressure arrangement 19.

In fig. 7, a portion of glass powder is loaded into a storage 18, and this is then heated before pressed through the outlet 11, and a new portion is then loaded into the storage 18a.

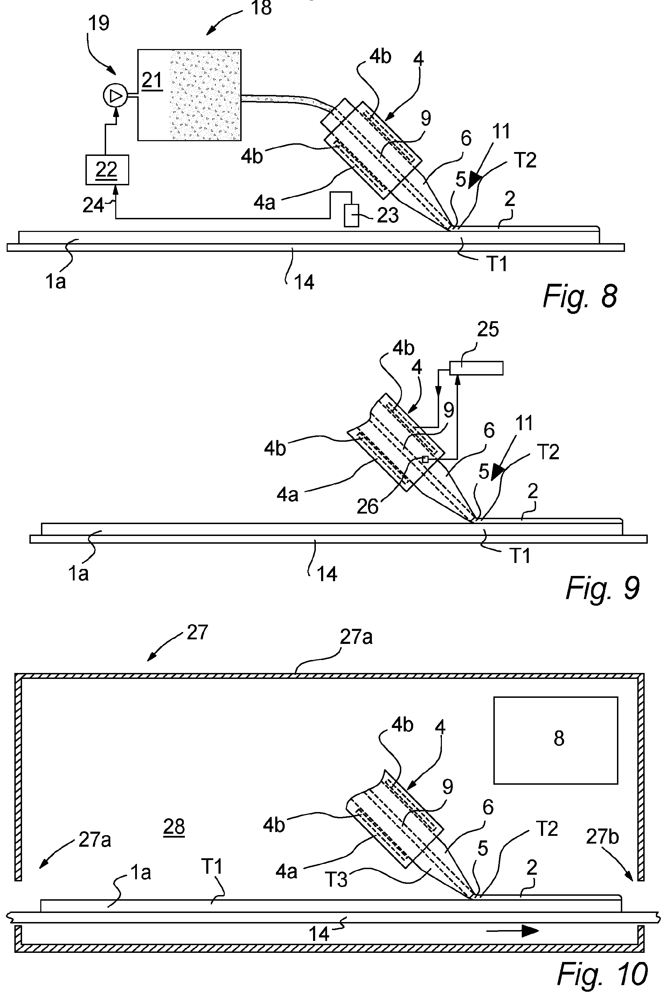

Fig. 8 illustrates schematically an embodiment of the present disclosure where a pressure control arrangement 22 is used. The pressure control arrangement 22 comprises control circuitry for controlling the pressure arrangement 19 so as to control the flow of supplied, heated glass material 5. The control may at least comprise
- that the applied pressure is adjusted to stop the flow of heated glass material forced through the dispensing nozzle outlet 11, and
- adjusting the applied pressure to start a flow of heated glass material 5 forced through the dispensing nozzle outlet 11.

This may e.g. be controlled by means of /based on input from one or more sensors 23 such as an optical, sensor, an inductive sensor, a mechanical sensor which detects the glass sheet 1a when a part of the mechanical sensor physically interacts with a part of the glass sheet 1a or the like.

The sensor 23 may provide input 24 to the control arrangement 22, which based thereon controls the pressure arrangement 19 to e.g. start and stop the flow of heated glass material 5 and/or to adjust the flow speed.

The pressure control arrangement 22 may in embodiments of the present disclosure be configured to control that the pressure is adjusted dependent on a relative displacement speed between the nozzle and the glass sheet 1a, 1b, for example, the higher speed, the higher pressure. A sensor arrangement 23 or a drive arrangement such as a drive arrangement controlling the support 14 may e.g. provide information relating thereto.

Generally, it is understood that the glass material 5 in the storage 18 or 18a in one or more embodiments of the present disclosure may be substantially free from binder material and/or solvent material before the heating by means of the first heating arrangement 4.

Fig. 9 illustrates an embodiment of the present disclosure wherein a temperature control arrangement control the viscosity with which the glass material is applied by controlling the first heating arrangement 4.

The temperature control arrangement 25 receives input from a temperature sensor 26 which is arranged at a location that makes it possible to reliably estimate the temperature T2 of the heated glass material 5 when it is heated. For example, it may be placed close to or in the nozzle 6, or it may be placed to physically touch the heated glass material. The temperature sensor 26 provides input to the temperature control arrangement 25, and the temperature control arrangement may thus turn the heating arrangement 4 on and off, or adjust the amount of heat provided dependent on the heater arrangement 4 solution so as to provide a stable temperature T2 of the heated, softened glass material, and thereby control the glass material to have the desired viscosity.

The temperature control arrangement 25 may e.g. comprise a PD (proportional-derivative) or PID (proportional-integral-derivative) control arrangement, or any other suitable control circuitry.

Fig. 10 illustrates schematically embodiments of the present disclosure wherein a glass sheet 1a is pre-heated in a heating furnace 27 by means of a further heating arrangement 8, before the heated glass material 5 is applied.

The furnace 27 comprises a furnace compartment 28 enclosed by walls 27a, and a further heating arrangement 8 controls the temperature in the compartment 28 to pre heat the glass sheet(s) to the desired temperature T1, e.g. by means of convection heating, for example by means of filtered air (not illustrated) that has been filtered by a filtering unit, e.g. comprising a HEPA filter or any other suitable type of filter.

In embodiments of the present disclosure, the temperature difference between the temperature T1 of the first glass sheet 1a and the temperature T2 of the applied, heated glass material 5 is less than 310°C, e.g. less than 200°C, such as less than 150°C, e.g. less than 110°C, such as less than 90°C, e.g. less than 50°C when the heated glass material 5 is applied.

The heating provided by the furnace 27 may e.g. be set so the glass sheet temperature T1 is between 50°C and 370°C, such as between 290°C and 350°C.

The furnace compartment 28 comprises an inlet opening 27a and an outlet opening 27b so that the glass sheets 1a can be transported into and out of the furnace compartment while placed on a support 14.

Fig.11 illustrates schematically an embodiment of the present disclosure, wherein the glass sheets 1a, 1b have been paired before the glass material 5 is applied. The paired glass sheets comprises a stepped edge configuration so that the heated glass material is applied to an end surface 100a of a first of the glass sheets 1b and a major surface 100b of the other glass sheet 1a facing said first glass sheet.

One of the glass sheets, I this case 1a thus has a glass sheet circumference that is a bit larger than the other glass sheet in order to obtain the stepped edge configuration.

In one or more embodiments of the present disclosure, the edge sealing material may, after it has been applied/extruded, automatically flow in between the glass sheets 1a, 1b, to bond to the glass sheet surfaces, such as major surfaces, facing the gap 13, due to e.g. the viscosity of the glass material 5 controlled by a temperature control arrangement as e.g. described at other locations in this document. The heated and softened glass material 5 may in one or more embodiments of the present disclosure automatically flow between 2 and 7mm such as between 3 and 5mm into the gap 13, measured from the edge 100a. The same may in one or more embodiments of the present disclosure apply for the embodiments described in relation to e.g. fig. 12 and/or 13.

Fig. 12 illustrates schematically an embodiment of the present disclosure wherein the heated and softened glass material 5 is provided in between glass sheets 1a, 1b that have been paired before the glass material 5 is applied. The glass sheets may here have substantially the same size.

Fig. 13 illustrates schematically an embodiment of the present disclosure wherein one of the glass sheets (but it may also be the other of the glass sheets) comprises an inclining end edge surface 100c that inclines from an end surface100a that is substantially perpendicular to the major surface 100b of the glass sheet 1b facing away from the gap 13. The surface 100c inclines from the end edge 100a and towards the gap, thereby providing a funnel feature that provides more space for applying the heated and softened glass material 5 for the edge sealing 2.

As can be seen from e.g. fig. 1c, fig 2-4 and fig. 12, the surface parts of the glass sheets between where the edge sealing 2 is arranged, and which are part of the surfaces of the glass sheets 1a, 1b facing the gap, these surface parts may in embodiments of the present disclosure be substantially parallel.

It is generally understood that the glass sheet or sheets may in one or more embodiments of the present disclosure be arranged substantially horizontally while the edge sealing material is applied on one a glass sheet, or when the edge sealing material is applied to glass sheets that have been pre-paired as e.g. described in relation to fig. 11, 12 and/or 13.

Fig. 14 illustrates schematically an embodiment of the present disclosure wherein a clamping arrangement 40 provides a compression force to the edge sealing during cooling of the edge sealing to harden the edge sealing 2.

Either the glass sheets 1a, 1b may have been paired before the heated and softened glass material 5 is applied by the nozzle arrangement 6, e.g. as disclosed in one or more of figs. 11-14 or alternatively, the heated glass material 5 may have has been applied and the glass sheetsla, 1b are then subsequently paired, see e.g. figs. 1a-1c.

The clamping arrangement 40 comprises edge clamps 44 having pressure members 45 arranged to press the edges of the glass sheets 1a, 1b towards each other, thereby providing a compression force on the edge sealing 2 between glass sheets 2a, 2b. The compression force is in fig. 14 provided by a resilient part 43 of the clamp 44 which may e.g. be made from a resilient metal plate, but it may also comprise a spring such as a coil spring or the like (not illustrated) for providing the resiliency and thus the compression force on the edge sealing 2.

It is generally understood that compression forces in one or more embodiments of the present disclosure may be provided by means of a plurality of clamps 44 distributed around the VIG assembly 3 and pressing on the edges of the major surfaces of the glass sheets 1a, 1b facing away from the gap 13.

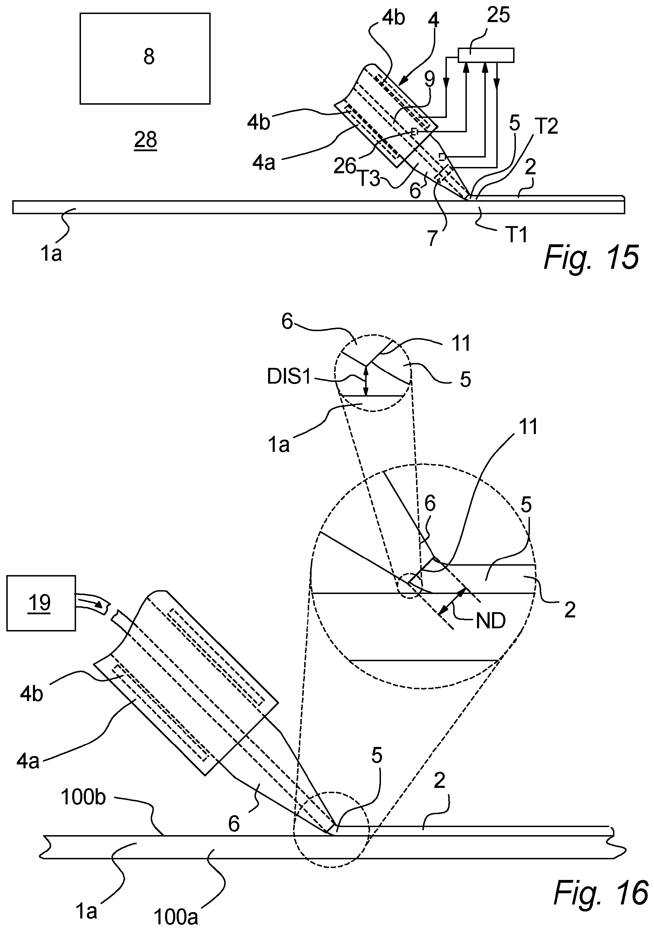

Fig. 15 illustrates schematically one or more embodiments of the present disclosure, wherein the said dispensing nozzle 6 is heated by means of a nozzle heating arrangement 7 so as to heat the nozzle 7 to a temperature T3 above the ambient temperature provided by the further heating arrangement 8.

The heated dispensing nozzle 6 is heated by the nozzle heating arrangement 7/nozzle heater or heaters 7 to obtain a nozzle temperature T3 of the dispensing nozzle 6, and the one or more glass sheets 1a, 1b for providing a VIG unit may in one or more embodiments of the present disclosure be heated by means of a second heating arrangement 8 to obtain a glass sheet temperature T1 that is lower than the nozzle temperature T3. The second heating arrangement may in further embodiments of the present disclosure be omitted.

The nozzle heating arrangement may in one or more embodiments of the present disclosure comprise one or more clam shell heaters (not illustrated) abutting or arranged proximate the nozzle, it may comprise electric heater elements, it may comprise laser heating, induction heating and/or any other suitable type of heater or combinations thereof. The nozzle heater may also be embedded/incorporated in the nozzle in one or more aspects of the present disclosure, e.g. as illustrated. In one or more embodiments of the present disclosure, the nozzle heater may comprise different types of heaters, e.g. as explained above.

In one or more embodiments of the present disclosure, a temperature control arrangement 25 is configured to control the nozzle heating arrangement 7 so as to keep the nozzle temperature T3 variation less than ±15°C, such as less than ±10°C, e.g. less than ±5°C, such as e.g. less than ±3°C while the heated glass material 5 is supplied through the dispensing nozzle 6.

The glass material 5 to be used for edge sealing 2 has may in in one or more embodiments of the present disclosure been heated and softened by means of a first heating arrangement 4 before it reaches the dispensing nozzle 6, which is heated by the nozzle heating arrangement7.

The first heating arrangement 4 and the nozzle heating arrangement 7 may in in one or more embodiments of the present disclosure comprise individual heaters 4a, 7, such as electrical heaters which are heated by electric power but it may also be other suitable types of heaters. It is furthermore understood that the heater arrangements 4 and 7 may comprise heaters of different types or may be of the same type.

On embodiments of the present disclosure, a temperature sensor 46 may be arranged to determine the nozzle temperature and transmit this information as input to a temperature control arrangement 25, which controls the heater 7 based thereon by means of a suitable type of control circuitry such as a PID or PD regulation circuitry or any other suitable type of control.

In further embodiments of the present disclosure, the control arrangement 25 may also be arranged to control the first heater 4b of the heating arrangement 4 based on input from both the sensor 26 and 46 to keep a steady nozzle temperature T3, or alternatively alone from the sensor 26 or the sensor 46.

From the above is understood that the temperature control arrangement 25 may be provided with sensors 26, 46 dedicated to measure the temperature at different locations along the stream of heated, softened solder glass 5 along e.g. a guiding tube 9, but it is also understood that in further embodiments of the present disclosure, the control arrangement may control the heaters 4b, 7 based on one sensor input alone, e.g. alone a sensor arranged in or at the nozzle to measure the temperature T3. Generally, it is understood that any suitable temperature sensors 26, 46 may be used, e.g. resistance sensor where the electrical resistance changes with the temperature change, an infrared temperature sensor arranged to measure the temperature of e.g. a heat capacity element 4b or the nozzle 6 from a distance, it may be a thermocouple solution, or any suitable solution arranged to measure the temperature with a sufficient accuracy in the desired temperature range.

In one or more embodiments of the present disclosure, the temperature control arrangement 25 is configured to control said nozzle heating arrangement 7 so as to keep the nozzle temperature variation less than ±15°C, such as less than ±10°C, for example less than ±3°C such as less than ±1°C while the heated glass material 5 is supplied through the dispensing nozzle (6).

The same may apply for allowed temperature variations allowed first heating arrangement 4 to keep e.g. the heat capacity element 4a at the desired temperature range.

In one or more embodiments, the temperature control arrangement 25 may control one or more heating arrangements such as the first heater 4 and/or the nozzle heater so as to obtain a glass material temperature variation of the heated and softened glass material less than ±10°C, such as less than ±5°C, for example less than ±3°C.

Fig. 16 illustrates schematically embodiments of the present disclosure wherein a pressure arrangement 19 as e.g. previously explained, extrudes the heated glass material 5 through a nozzle 6 outlet 11.

The dispensing nozzle 6 comprises an outlet opening 11 having a diameter ND. The nozzle outlet diameter ND may in one or more embodiments of the present disclosure be between 0.3mm and 3mm, e.g. between 1mm and 2mm such as between 1.1 and 1.4 mm, for example about 1.2 mm.

The outlet 11 of the dispensing nozzle may in embodiments of the present disclosure be placed at a maximum distance DIS1 from the part of the glass sheet 1b, 1c surface or surfaces to receive the glass material 5 which is less than 10mm, such as less than 5mm, e.g. less than 2mm. This may in embodiments of the present disclosure be applied both in the case that the glass sheets 1a, 1b are paired after the heated and softened glass sheet material 5 is applied (see fig. 1a-1b), or if the glass material is applied after the glass sheets 1a, 1b have been paired, see e.g. figs. 11-13.

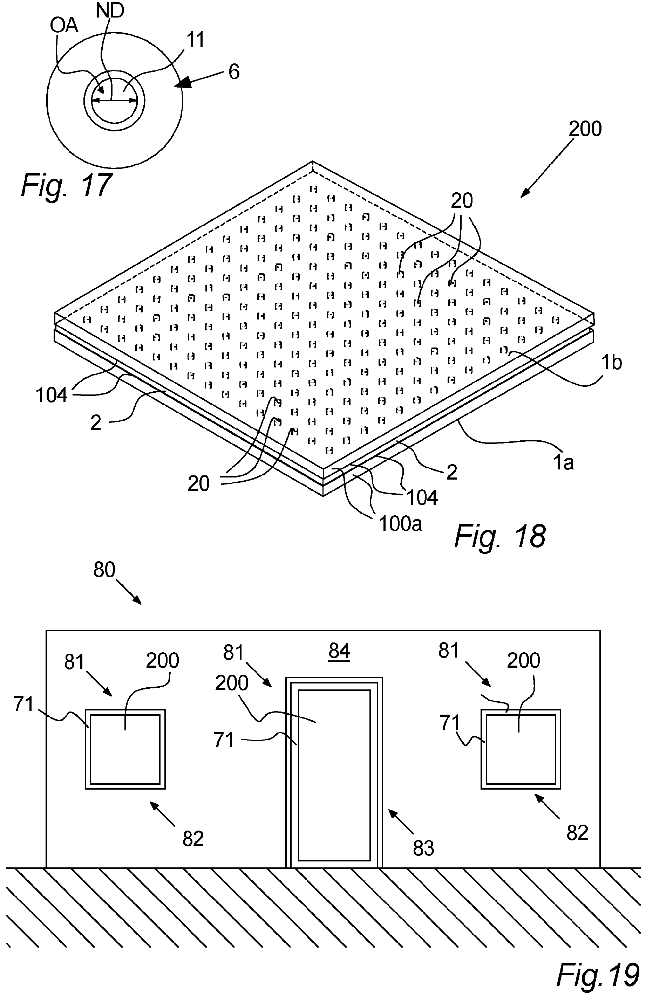

Fig. 17 illustrates schematically, in a view towards the nozzle outlet 11, an embodiment of the present disclosure wherein the dispensing nozzle 6 comprises an outlet opening 11 having a diameter ND and having a circular shape. The cross sectional area OA of the nozzle outlet 11 may in one or more embodiments of the present disclosure be between 0.2mm² and 4mm², such as between 0.4mm² and 2mm², for example between 0.6mm² and 1.4mm²

Fig. 18 illustrates schematically in perspective a VIG unit 200 made from a glass sheet assembly 3 according to one or more of the embodiments and/or aspects described above and/or below. The VIG unit comprises the glass sheets 1a, 1b, and an edge sealing 2 made from a glass material 5 which was heated and softened before it was applied along edges 104 to seal a gap between the glass sheets 1a, 1b (see ref. 13 in the previous figs.).

A plurality of support structures 20 are arranged in the gap 13 of the glass sheet assembly 3, and the gap 13 is evacuated to a pressure below 10⁻³ bar, for example below 10⁻⁵ bar, such as below 10⁻⁶ bar, e.g. below 10⁻⁴mbar such as below 10⁻⁵mbar. This may be obtained by means of an evacuation cup or in a vacuum chamber.

The support structures 20 may e.g. have been arranged at one of the glass sheets before the heated and softened glass material 5 is provided, but in other embodiments of the present disclosure, the support structures may be distributed after the edge seal is applied and before another glass sheet is paired with the glass sheet having the edge sealing material applied.

The glass sheets 1a, 1b may in one or more embodiments of the present disclosure each have a thickness between 1.5mm and 4mm such as between 1.8mm and 2.2mm, e.g. around 2mm.

In fig. 18, the edge sealing 2 is applied on a major surface along the edges 104 separating end surfaces 100a and a major surface of the glass sheets 1a, 1b facing the gap between the glass sheets which is maintained by the support structures 20.

In one or more embodiments of the present disclosure, a getter (not illustrated) may be placed in the gap 13 between the glass sheets. This getter may comprise a reactive material and help to maintain a reduced pressure over time in the gap by absorbing/"getting" gasses that are released from e.g. the edge sealing over time. The getter may in embodiments of the present disclosure be adapted to the gasses that may be included in the heated and softened edge sealing when it is applied, so that the getter may absorb these if they are released from the edge sealing.

The edge sealing 2 may in one or more embodiments of the present disclosure comprise at least 30wt% soda lime glass, such as at least 40wt% soda lime glass, such as at least 50wt% soda lime glass, such as at least 60wt% soda lime glass, such as at least 70wt% soda lime glass. In one or more embodiments it may comprise at least 85wt% soda lime glass, such as at least 90wt% soda lime glass, for example at least 95wt% soda lime glass such as at least 99wt% soda lime glass, such as as at least 99.5wt% soda lime glass. In further embodiments, the edge sealing 2 may consist of soda lime glass material. In other or further embodiments, the edge sealing may comprise glass material and filler material such as ceramic filler material for e.g. matching the glass material of the edge sealing with thermal expansion properties of the glass sheets 1a, 1b of the VIG unit 200

Fig. 19 illustrates a building 80 seen from the outside/exterior, comprising apertures 81 for windows 82 and a door 83 in the outer wall 84 of the building 80.

The apertures 81 are covered by VIG units 200 manufactured in accordance with one or more of the embodiments of the present disclosure. The VIG units 200 are placed in a covering frame 71, and the frame 71 is then attached by fastening parts (not illustrated) such as mechanical fastening parts in the form of one or more hinges, screws, nails, mounting and/or the like to the wall 84.

Generally, it is to be understood that the glass sheets described in the present disclosure and used for VIG assemblies/units in one or more embodiments may be transparent to light such as light having a wavelength in the range of about 400 nm to 700 nm to at least such a degree which enables humans to see through the glass sheets of the VIG unit. Also the glass sheets may be configured so that infrared light (about 700 nm to 1mm) is transmitted through the glass sheet.

One or more of the glass sheets may e.g. comprise a low-E coating for improving the U-value of the VIG. The low E coating may in one or more embodiments of the present disclosure arranged at a major surface of one of the glass sheets 1a, 1b, and faces the gap 13 between the glass sheets.

In further embodiments of the present disclosure, the VIG units manufactured in accordance with one or more of the embodiments described in this document may be used for e.g. refrigerator units or ovens such as conventional household ovens as e.g. windows allowing viewing into the interior of such appliances.

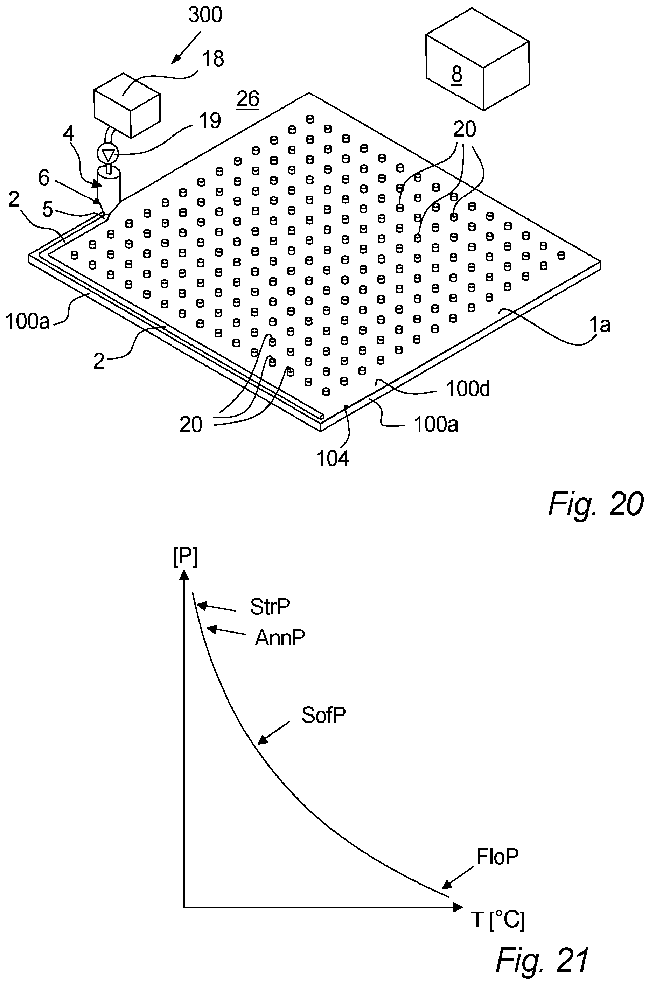

Fig. 20 illustrates schematically, in perspective, a system 300 for providing an edge sealing 2 for a VIG unit according to various embodiments of the present disclosure as e.g. described above and/or below.

The glass sheet 1a is placed in a furnace compartment 26, and a heating arrangement 26 pre-heats by a heating arrangement 8 the glass sheet (1a) (or sheets dependent on e.g. if the glass sheets are either paired before the edge sealing is applied or not). It is however understood that in further aspects, a furnace arrangement comprising heater 8 may be omitted and the glass sheet or sheets may be arranged in an ambient temperature between e.g. 5°C and 50°C.

In the present example, the glass sheets 1a, 1b (1b is not illustrated in fig. 20) are paired after the heated glass material 5 is applied. In other aspects, the glass sheets may have been paired before the glass material is applied, see e.g. figs. 11, 12 and/or 13 and the description thereto.

Glass material 5 is provided from a storage 18 of the glass material 5 by the pressure arrangement 19 to be heated by the heating arrangement 4, and the heated and softened glass material 5 is then then pressed through the nozzle 6 to be applied as continuous trip or strips of glass material 5 on a major surface 100b along the edges 104 of the glass sheets 1a, 1b separating the end surfaces 100a and the major surface 100b.

The supply arrangement 300 may in one or more embodiments of the present disclosure be kept substantially fixed while the glass sheet or sheets may be positioned and moved along a predefined path by a transportation arrangement (not illustrated in fig. 20) such as a conveyer solution comprising a conveyer belt, e.g. with a flat and e.g. hard surface arranged below the conveyer belt, it may comprise rollers for supporting the glass sheet while the glass material 5 is applied and/or the like. Alternatively, the nozzle 6 may be moved, e.g. while supported and guided by a rail arrangement (not illustrated) while the glass sheets 1a are kept substantially fixed during the applying of the heated material 5 and/or the like.

For example, the heated an melted glass material for the edge sealing may be applied with between 3 and 200 cm/minute such as between 7 and 100 cm/minute, e.g. between 14 and 50 cm/minute by means of a nozzle by the above mentioned relative movement between nozzle outlet and glass sheet or sheets. In one or more embodiments of the present disclosure, the edge sealing may be applied even faster such as at a speed above 200 cm/minute.

After the edge seal 2 material is applied all the way around the glass sheet or sheets, and when the glass sheets have been paired, the edge sealing is hardened by cooling it, and the gap 13 is evacuated. The evacuation e.g. may be provided during cooling while the edge sealing is still partly soft to provide a compression force in the edge sealing, or it may be provided later on after the hardening of the edge sealing is finished.

Fig. 21 illustrates a viscosity curve for an edge sealing glass material according to embodiments of the present disclosure, measured in Poise[P] (in a logarithmic scale) as a function of the glass material temperature. As can be seen, the glass material go into different softness states dependent on the temperature, and the glass material viscosity decreases as the temperature T raises. This may vary based on the glass material type/composition.

At the Strain point StrP, the glass material is substantially solid. Above the Glass Strain point is, at a higher temperature, the annealing point AnnP of the glass material, where the glass is too hard for significant external deformation without breaking, but it may be soft enough to relax internal strains in the glass material. Between the Annealing point AnnP and the "Flow point" FloP, the glass material viscosity gradually reduce as the temperature rises, until the glass material reaches a "flow" viscosity at the flow point FloP.

The temperature control arrangement 25, as e.g. disclosed above in relation to various embodiments of the present disclosure, may in embodiments of the present disclosure control the heater or heaters for heating the glass material 2 to maintain the glass material at a temperature T2 between the annealing temperature and the temperature where the glass material obtain a "flow" viscosity, so as to obtain a desired, controlled viscosity of the glass material.

The glass material may in embodiments of the present disclosure be heated to a temperature between the glass softening point SofP and the flow point FloP, e.g. to a melting temperature of the glass material.

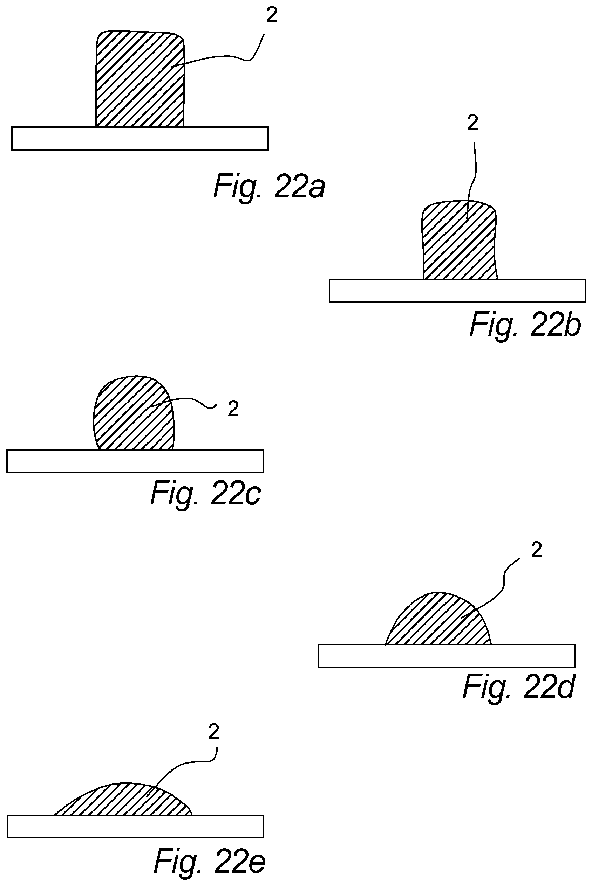

Figs. 22a-22e which illustrates schematically the changing geometric shape of an initially substantially rectangular glass material (seen in cross section) for an edge sealing due to viscosity change, when heated, according to one or more embodiments of the present disclosure. In fig. 22a, the glass material has been applied and is at room temperature of about 20°C.

The temperature is then increased in fig. 22b, and as can be seen, the glass material 2 goes into a "deformation viscosity point" where the top of the glass material starts to round at the corners providing the top surface part of the glass material 2.

As the temperature continues to raise in fig. 22c, the glass material continues to soften into a "sphere viscosity point", and may round both at the top corners and near the contact corners between the supporting structure such as a glass sheet supporting the glass material 2.

From here, when raising the temperature further as seen in in fig. 22d, the glass material goes into a "half ball viscosity point" at Fig. 22d.

After this, if the glass material temperature raises further, as seen in fig. 22e, the glass material may obtain a "flow viscosity point".

The glass material temperature may in embodiments of the present disclosure be kept so that the glass material has a viscosity between, but not necessarily including, the "flow viscosity point" (fig. 22e) and the "deformation viscosity point" (fig. 22b), such as between the "half ball viscosity point" (fig. 22d) and the "deformation viscosity point" (fig. 22b), e.g. between the "half ball viscosity point" (fig. 22d) and the "sphere viscosity point" (fig. 22c) for the given, utilized glass material 2.

The suitable viscosity may in one or more embodiments of the present disclosure be controlled by means of the first heating arrangement, nozzle heater and/or the like as e.g. described in relation to various embodiments above, e.g. so that a controlled extrusion of the glass material may be extruded through a nozzle 6 outlet by means of an applied pressure.

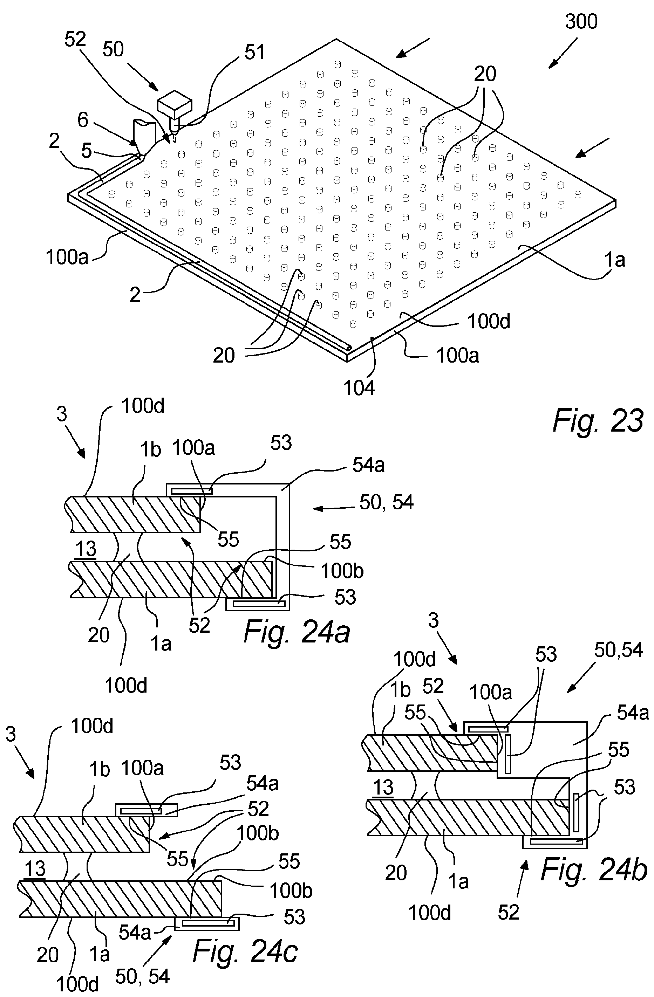

Fig. 23 schematically illustrates embodiments of the present disclosure wherein one (or more) heaters 50 locally heats a zone 52 of a tempered glass sheet 1a where the heated, softened glass material 5 is applied to provide the edge sealing 2. This causes an increase of the temperature of the heated zone 52 compared to the surrounding part of the glass sheet 1b comprising the heated zone 52.

The heater 50 provides the heating of the zone 52 prior to/before the heated, softened glass material 5 is applied, in this example by moving the glass sheet 1a relative to the heater 50 and nozzle 6, but the heater and nozzle may alternatively be moved while the glass sheet is kept in a fixed position, or a combinations thereof may be used.

The heater 50 may in one or more embodiments of the present disclosure be moved towards and away from the nozzle 6 (not illustrated), e.g. while heating a strip of the glass sheet or sheets near the edges of the respective glass sheet, where the heated, softened glass material 5 is applied/provided.

The heater 50 thus heats the part of the glass sheet surface where the edge seal 2 is subsequently applied by the nozzle 6 by extrusion, to raise the temperature of this part of the glass sheet while maintaining the part of the glass sheet where the support structures 20 are placed, at a lower temperature.

The glass sheet 1a may in one or more embodiments of the present disclosure be preheated by means of a further heating arrangement 8 (not illustrated in this fig.), such as in a furnace compartment of a furnace, e.g. as previously described, before the heated glass material 5 is applied and before the local heating by the one or more heaters 50 is provided.

Thus, the heater 50 may raise the temperature of the zone 52 of the glass sheet above the temperature provided by the further heating arrangement 8. Alternatively, the further heating arrangement 8 may be omitted in further embodiments, and the ambient temperature of the glass may e.g. be kept between 5-50°C such as 15-30°C.

The glass sheet 1a, 1b may in one or more embodiments of the present disclosure, as e.g. previously explained, be thermally tempered glass sheet. If the glass sheet or sheets where the glass material 5 is applied and comprising the locally heated zone 52 is/are tempered glass sheets, the temperature at or near the areas where the support structures are placed may in one or more embodiments of the present disclosure be kept below the de-tempering temperature of the thermally tempered glass sheet, to avoid or reduce the de-tempering of the glass sheet(s) in this area by reducing at least partly a stress condition in the glass obtained by the tempering process.

The heater (or heaters 50) may heat the zone to a temperature above 50°C such as above 200°C, e.g. above 300°C such as above 400°C. In one or more embodiments of the present disclosure, said zone 52 may be heated to a temperature between 150°C and 750°C such as between 200°C and 650 °C, e.g. between 300 °C and 420 °C.

In one or more embodiments of the present disclosure, the locally heated zone 52 may be heated to a temperature which is at least 100°C higher, such as at least 200°C higher, e.g. at least 300°C higher such as at least 400°C, e.g. at least 500 °C higher than the temperature of the glass sheet or sheets 1a, 1b comprising the heated zone, measured at a location which is more than 5 such as more than 10cm from the heated zone 52. This may e.g. be determined by measuring the glass sheet temperature 10 cm. from the glass sheet edge which is nearest the heated zone 52, and comparing this temperature to the temperature at the heated zone.

The heater 50 for heating the zone 52 may in one or more embodiments of the present disclosure comprise a radiation heater such as an electromagnetic radiation heater 51.The radiation heater 51 may emit electromagnetic radiation in the range of 300-4000 nm such as in the range of 600-2000 nm, e.g. in the range of 1000 nm - 1100 nm. In other embodiments, the radiation heater may comprise an induction heater solution.

The radiation heater may in one or more embodiments of the present disclosure be a laser emitting lights, where the light from the laser is aiming towards the zone 52 to be heated. The radiation heater 51 may e.g. emit a radiation in one or more of the above mentioned wavelength ranges. In embodiments, the laser may be a 1064 nm laser. The heater 50 may in one or more embodiments of the present disclosure comprise a plurality of radiation heaters 51 for heating the zone 52 before the glass material for the edge sealing 2 is applied and/or after the edge sealing 2 is applied.

Figs. 24a, 24b and 24c schematically illustrates embodiments of the present disclosure where the heater 50 for heating the zone(s) 52 comprises a conduction heating unit 54. The conduction heating unit 54 comprises one or more heating elements 53 such as electrical heating elements arranged to heat the zone 52. In figs. 24a-24c, the a conduction heating unit 54 is configured to simultaneously heat the zones 52 of paired glass sheets 1a, 1b separated by support structures of a VIG unit assembly 3. It is however understood that in other embodiments of the present disclosure, the conduction heating unit may be adapted to heat a zone 52 of just one glass sheet, e.g. as illustrated in fig. 23.

The conduction heating unit 54 may thus in one or more embodiments of the present disclosure be pressed towards one or more surfaces 100a, 100d, 100b of the glass sheet or sheets to be heated by the heater(s) 50.

The conduction heater 54 comprises a surface 55 for heating a surface of the glass sheet(s) 1a, 1b, by touching these physically. In the examples of fig. 24a and 24b, the surfaces 55 are arranged to touch the outwardly facing major surfaces 100d of the glass sheets facing away from the gap 13. In fig. 24b, it also heats the end edge 100a of the glass sheet, this may in further embodiments of the present disclosure be provided without heating the major surfaces 100d.

The conduction heater unit 54 may provide a heating of the zone 52 to heat the surfaces which the heated and softened glass material is to bond to, in some embodiments of the present disclosure by heating these surfaces by heating on the opposite side(s) of the glass sheet 1a, 1b, so that the heat is transferred through the glass sheet(s) see e.g. figs 24a-c.

The heating element(s) 53 may in one or more embodiments of the present disclosure, e.g. as illustrated, be attached to or embedded in a conduction heating body 54a made from e.g. a metal material such as steel, aluminium or copper, and/or any other suitable material and/or alloy. In futher embodiments, the heater may be arranged at a surface of the body 54a, so that the body 54a acts as a support for the heating element or elements 53. The body 54a may e.g. be common to both heaters 50 for heating the respective zones of glass sheets 1a, 1b, as illustrated in fig. 24a and 24b or it may be separate bodies as illustrated in fig. 24c.

In embodiments as illustrated in figs. 24a-24c, the conduction heater unit 54 may be arranged so that it does not touch the surface where the heated and softened glass material is applied to obtain the edge sealing 2, e.g. as illustrated in fig. 24c. In other embodiments of the present disclosure, (not illustrated) the conduction heater unit 54 may heat directly on the surface where the glass material is to be applied. This surface may e.g. be the end surface 100a and/or a part of the major surface 100b of one or both of the glass sheets 1a, 1b facing towards the gap 13.

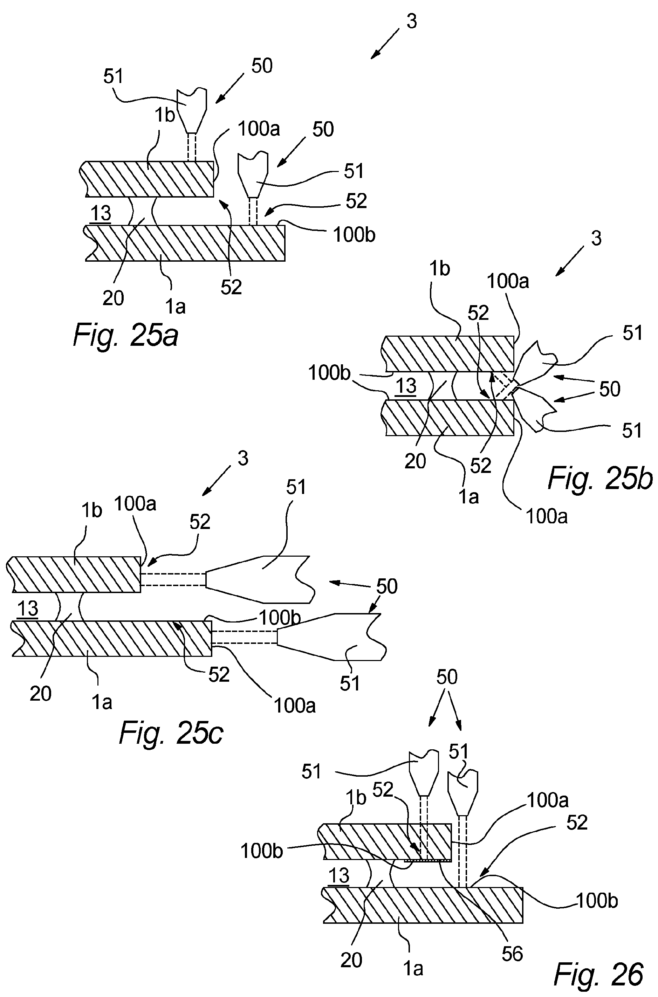

It is generally understood that the conduction heating as described and/or illustrated in relation to figs 24a-24c, in further embodiments of the present disclosure also may be adapted to and used at a VIG unit assembly comprising substantially aligning end edges, e.g. as illustrated in fig. 25b, e.g. by heating outer major surfaces and/or end edge surfaces 100a.

Fig. 25a-25c illustrates schematically various embodiments of the present disclosure, where radiation heaters 51 heats the zones 52 of a VIG unit assembly 3 comprising paired glass sheets 1a, 1b that are separated by support structures 20. The radiation heaters 51 increase the temperature of the zone 52 compared to the surrounding part of the glass sheets comprising the heated zone 52, and this may be provided prior to and/or after the heated, softened glass material 5 is applied to provide the edge sealing.

In fig. 25a, the VIG unit assembly 3 is arranged in a stepped configuration. Here, two radiation heaters 51, such as lasers or any other suitable type of radiation heaters, heat each their glass sheet 1a, 1b of the VIG assembly 3. A first of the heaters heat the upper glass sheet 1b at the surface facing away from the gap, and the other heater heat the other surface of the glass sheet 1a where the edge sealing 2 is applied.

In fig. 25b, the glass sheets 1a, 1b of the VIG unit assembly 3 has substantially the same width and height, and the end edges 100a thus substantially align. Here, inclining radiation heaters 51 are arranged to radiate the radiation, such as laser or infrared heating, towards the surfaces of the glass sheets facing the gap 13, thereby heating the zones 52.

It is generally understood that in one or more embodiments, the glass material 5 may be provided, e.g. by one or more nozzles 6, to seal a gap between glass sheets of substantially the same size, and comprising substantially aligned end edges as illustrated in one or more of figs. 5, 12 and/or 25b. It may here extend between the surfaces facing a gap between the glass sheets and may e.g. also cover at least a part of the end edge surfaces 100a, (for fig. 13, it may also cover at least a part of the inclining end edge surface 100c (not illustrated in fig. 25c))

In fig. 25c, the radiation heaters 51 heat the zones 52 by heating end edges 100a of the glass sheets 1a, 1b. This may be utilized in embodiments of the present disclosure where the glass sheets have a stepped configuration, and/or in embodiments of the present disclosure where the end edges 100a substantially align as e.g. in fig. 25c. Fig. 26 illustrates schematically an embodiment of the present disclosure, where a radiation heater 51 heats a layer 56 arranged at the surface of one of the glass sheets 1b, by emitting an electromagnetic radiation through the glass sheet comprising said layer 56 to be heated. In other embodiments, the radiation may also be provided directly to the layer 56 without radiating through a glass sheet. The layer 56 may be a metal layer or another suitable layer which has been applied to the glass sheet (or sheets) and which may be heated due to the radiation, e.g. by absorbing the radiation, thereby heating the zone 52 of the glass sheet comprising the layer 56. In fig. 56, the layer is arranged at a glass sheet to be heated that has been paired/pre-paired with another glass sheet 1a before the zone 52 heating, but it is understood that the layer 56 may also be used if a zone 52 of just one glass sheet is heated before pairing, e.g. as illustrated in fig. 23.

In one or more embodiments of the present disclosure, the layer 56 may be part of a low-e coating of the glass sheet, or it may be applied separate so said low-e coating. In further embodiments of the present disclosure, the layer 56 may be arranged at a surface where no e-coating is applied.

In the illustrated example, the layer 56 is applied at the part of the surface 100b of the glass sheet 1b where the heated and softened glass material 5 will provide a connection/bonding with the glass sheet.

In one or more embodiments of the present disclosure (not illustrated), the layer 56 may be arranged at the end edge 100a or at an outer surface of the glass sheet, such as the outer major surface facing away from the gap 13, and by heating the layer 56 by the radiation heating, this conduction heats the zone 52 of the glass sheet so that the surface where the glass material 5 is to bond is heated, but without having the layer 56 applied at that surface.

In the illustrated example, the layer 56 is applied at the smallest glass sheet of a stepped edge configuration. In further embodiments of the present disclosure (not illustrated), a layer 56 may also or alternatively be applied at the larger glass sheet 1a, e.g. at the outwardly facing surface or at a part of the surface facing the gap 13.

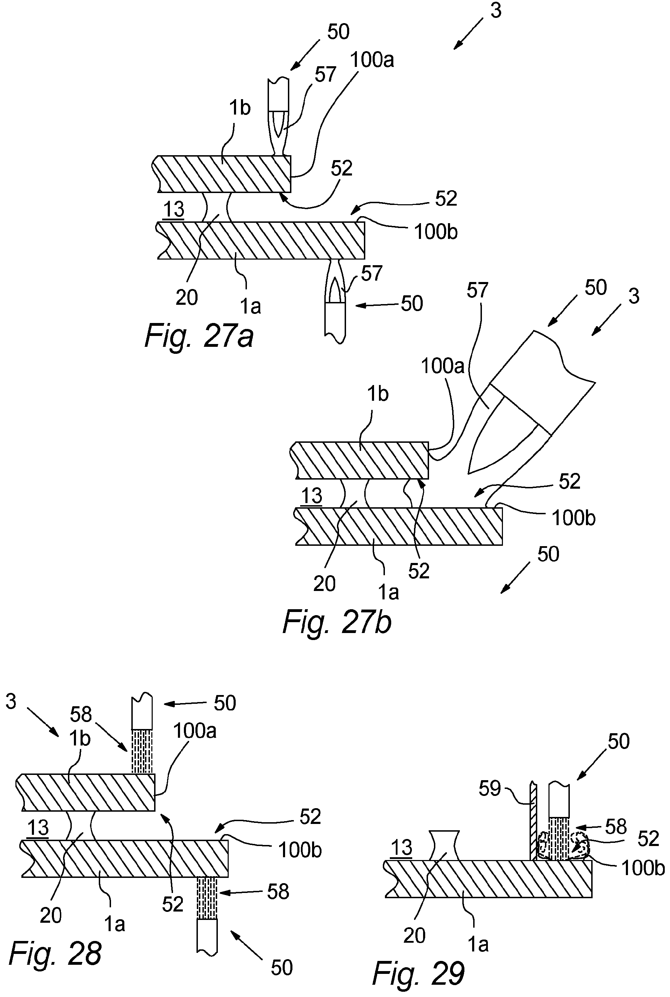

Fig. 27a-27b illustrates schematically embodiments of the present disclosure, wherein the heater 50 for providing the local heating of the zone 52 is a torch device arranged to heat the zone or zones 52 by means of a flame 57.

The torch device may in one or more embodiments of the present disclosure be configured to heat the zone or zones 52 by means of a gas flame, by means of a plasma torch solution, and/or the like.

Generally it is understood that the heating of the zones 52 of both glass sheets, in one or more embodiments of the present disclosure may be provided to the zones 52 of both glass sheets of a the VIG unit assembly 3 simultaneously by means of a single heater solution for heating both zones 52, e.g. opposite to each other, in the present example it is provided by a wide, common flame 57 (fig. 27b), but it may also be a common radiation heating, convection heating and/or the like.

In one or more further embodiments of the present disclosure, the local heating of zones 52 may be provided or by means of individual heaters, in the present example it is individual torch devices 50 for heating the zone 52 of each their glass sheet 1a, 1b by means of each their flame 57 (see fig. 27a). The same may apply for radiation heaters, convection heaters and/or the like in one or more embodiments of the present disclosure.

Fig. 28 illustrates schematically embodiments of the present disclosure, wherein the local heating of the zone(s) 52 is provided by means of convection heating where a nozzle provides pressurized, directed, heated gas 58, such as air or any other suitable type of gas, towards the zone(s) 52 so as to heat the zone(s) 52 locally to increase the temperature of said zone or zones 52 compared to the surrounding part of the glass sheet or sheets comprising the heated zone 52.

The convection heating may in one or more embodiments of the present disclosure be provided to the zones 52 of both glass sheets of a the VIG unit assembly 3 by means of a single, common nozzle (not illustrated), or by means of individual nozzles as illustrated in fig. 28 for heating the zone 52 of each their glass sheet 1a, 1b by means of each their flow of heated, directed gas.

Fig. 29 illustrates schematically embodiments of the present disclosure, wherein a heat shield 59 is arranged between the heating medium such as a flow of heated gas or a flame as e.g. described above, and the remaining part of the glass sheet, so as to screen the main part of the glass sheet where the support structures 20 support from the heating medium that heats the zone 52.

The heat shield may in one or more embodiments of the present disclosure screen the part of the glass sheet where the support structures 20 support from being heated due to e.g. convection heating and/or radiant heat provided by means of the local heater 50 to heat the zone 52, and thus help to reduce the heating of this area, e.g. to maintain a compressive and/or tensile stress in the glass sheet or sheets 1a, 1b if these are for example tempered/toughened glass sheets such as thermally tempered glass sheets.

The heat shield 59 may in one or more embodiments of the present disclosure comprise a plate or block of a material such as metal, e.g. steel, it may comprise a glass plate such as a transparent glass plate and/or any other suitable kind of material.

The heat shield 59 may in one or more embodiments of the present disclosure comprise an insulating layer (not illustrated), and/or it may be cooled by a cooling system (not illustrated) providing forced cooling such as by means of a fluid medium, e.g. a liquid or a gas, and/or the like.

The heat shield may in one or more embodiments of the present disclosure be arranged fixed relative to the heater or heaters 50. In further embodiments, the heater or heaters 50 may be arranged to move relative to the shield 59.

It is to be understood that the heat shield may in one or more embodiments of the present disclosure also be utilized if the heating of zones 52 is provided at a VIG unit assembly 3 comprising glass sheets 1a, 1b separated by support structures, e.g. in accordance with one or more aspects and/or embodiments described above or below.

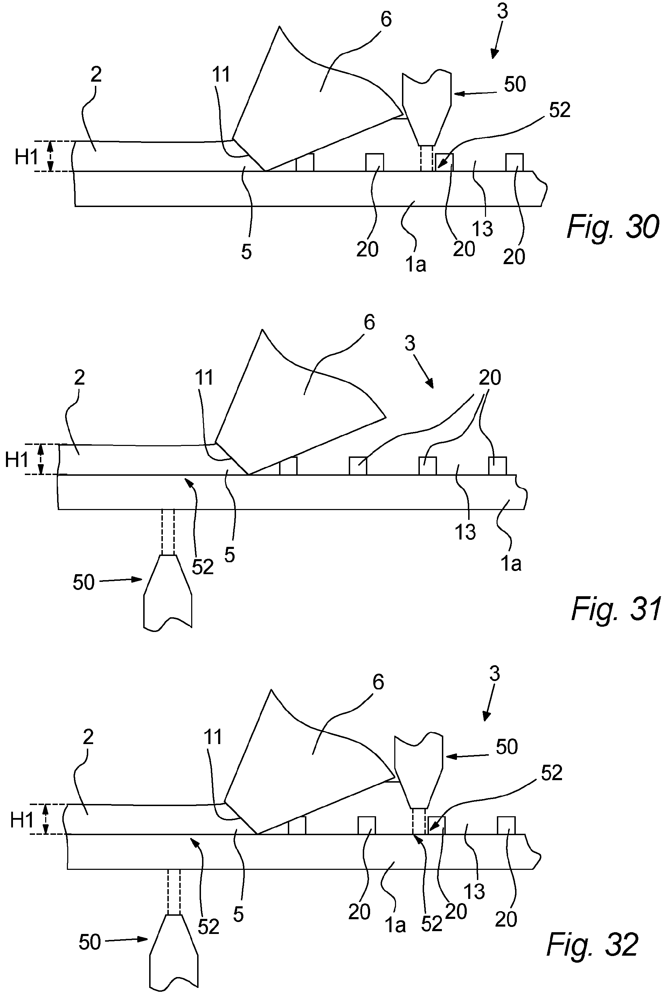

Fig. 30 illustrates schematically embodiments of the present disclosure wherein the local heating of the zone 52 is provided prior to applying said heated, softened glass material 5 for the edge sealing 2, and where the heated, softened glass material 5 is applied at the heated zone. In the example of fig. 30, the other sheet of the VIG unit assembly 3 is not illustrated 1b, but in embodiments of the present disclosure where the glass sheet 1b is present when the glass material 5 is applied, this may also be heated locally at a zone 52, for example as described above.

Fig. 31 illustrates schematically embodiments of the present disclosure, substantially as fig. 30, but wherein said local heating of the zone 52 instead is provided after said heated, softened glass material 5 for the edge sealing 2 is applied, thereby heating said zone 52 and at least partly also the applied, softened glass material 5.

Fig. 32 illustrates schematically embodiments of the present disclosure, which is a combination of the embodiment's relating to fig. 31 and 32, so that the local heating of the zone 52 is provided both prior to applying said heated, softened glass material 5 for the edge sealing 2, and wherein a local heating of the zone 52 is also provided after said heated, softened glass material 5 for the edge sealing 2 is applied.

In further embodiments of the present disclosure (not illustrated), the heater or heaters 50 may be arranged to heat the zone 52 where the glass material is applied, while the glass material is applied at the zone that is heated. This may e.g. be provided by arranging the heater or heaters 50 opposite to the nozzle outlet 11.

It is understood that in one or more embodiments of the present disclosure, any of e.g. the previously mentioned types of heaters 50 or heating may be provided to provide the local heating of the zone or zones 52 before and/or after the heated, softened glass material 5 is applied for the edge sealing 2.

Generally, it is understood that in embodiments of the present disclosure, said glass sheet or sheets 1a, 1b)and said one or more heaters 50 for providing the local heating may be moved relative to each other while the one or more heaters 50 heat said surface(s). For example, a convection heater, radiation heater, torch heater or the like may move toward and away from the nozzle 6 so as to heat a line/strip of the glass sheet or sheets where the edge sealing strip will be and/or has been applied, so as to provide the local heating of the zone before and/or after the heated, softened glass material is applied.

In one or more embodiments of the present disclosure, the heater or heaters 50 for providing the local heating may be arranged at a predetermined, fixed distance ahead and/or behind the nozzle 6, to provide said heating before and/or after the heated, softened glass material is applied.

In fig. 30-32, only one glass sheet 1a is illustrated, but it is understood that the same may apply for pre-paired glass sheets as e.g. disclosed in relation to for example one or more of figs. 24-28.

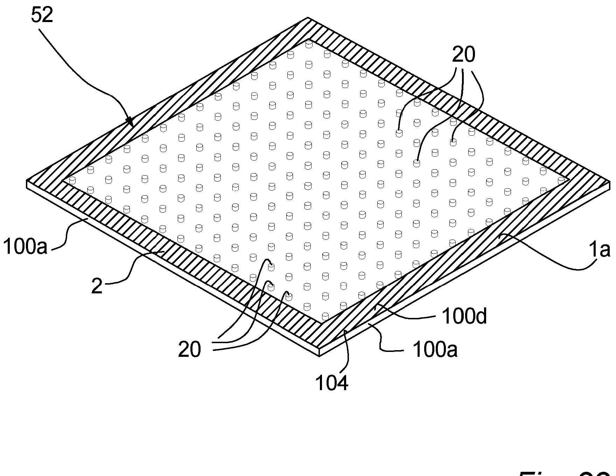

Fig. 33 illustrates schematically and in perspective an edge zone 52 that may be heated locally in accordance with one or more embodiments of the present disclosure, by means of one or more heaters 50 as e.g. described above.

The hatched part is the zone 52 to be heated locally, while the un-hatched region of the glass sheet may be kept at a temperature below a de-tempering temperature of the glass sheet, or may not get too high above the de-tempering temperature for too long time, in the event that the glass sheet or sheet 1a, 1b is a thermally tempered/toughened glass sheet.

It is understood that if the glass sheet or sheets at which the heated and softened glass material is applied are thermally tempered glass sheet, a local heating of the zone 52 as e.g. described above, may at least partly reduce the stress (obtained by the thermally tempering of the glass sheet) in this area/zone compared to the stress in an area of the glass sheet at and/or near the centre of the glass sheet 1a, 1b.

The same may in one or more embodiments of the present disclosure apply, even if the zone 52 is not heated by local heater(s) 50, but merely due to applying the heated and softened solder glass material, dependent on the temperature of the applied glass material 5 for the edge sealing and the characteristic of the glass sheet(s) comprising the zone 52.

Hence, the edge seal 2 to be provided may have reduced the compressive stress in the surface of the glass sheet facing the edge seal, as the edge seal is applied in heated state and hence may at least partly de-temper the surface area at and possibly also near the edge seal. Also or alternatively, the heating of the zone 52 by a heat source 50 may, as mentioned, have provided or contributed to this at least partly de-tempering. The other major surface of the glass sheet facing away from the edge seal in the final VIG unit, and which is opposite to the edge seal and the part of the surface attached to the edge seal, may though not be de-tempered to the same degree, and may hence maintain at least a part of the compressive stress induced during the initial thermal tempering of the glass sheet. Generally, the reduced stress may provide that the zone at and/or near/proximate said edge sealing 2 is at least partly annealed, such as fully annealed. However, it is understood that in one or more embodiments, the zone 52 at and/or near the edge sealing and having a reduced stress may comprise that both parts/sides of the glass sheets 1a, 1b that initially comprised a compressive stress due to the thermal tempering may be reduced in stress due to a heating of the glass sheet during manufacturing, compared to the stress in an area of the glass sheet at and/or near the centre of the glass sheet.

However, it is understood that in further embodiments of the present disclosure, the glass material may be applied at a temperature that may substantially not affect the tempering/ stress in the zone 52, and/or the zone may be heated prior to and/or after the glass material is applied to a temperature that does substantially not affect the tempering/stress.

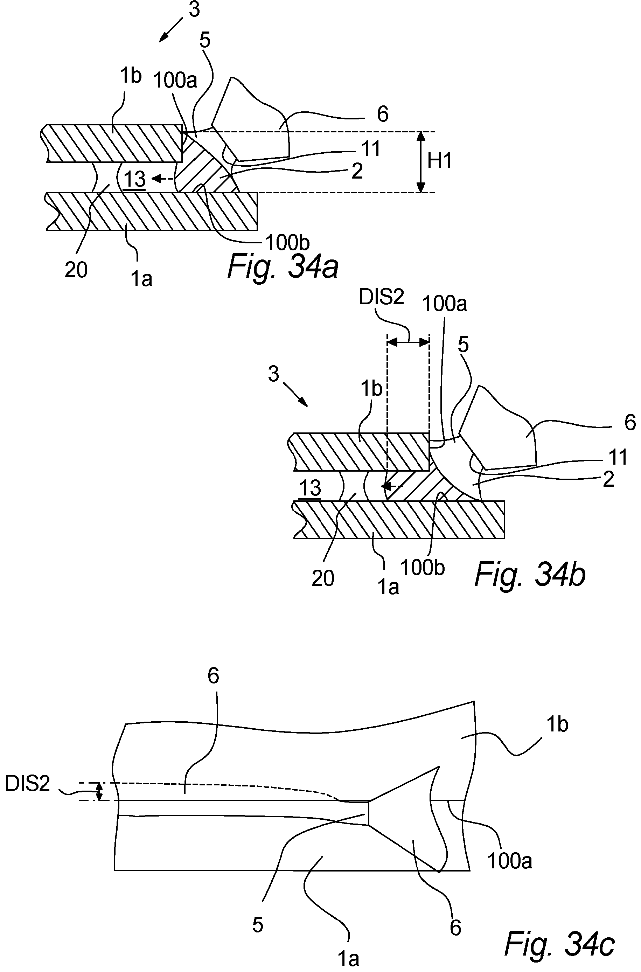

Fig. 34a-34c illustrates schematically embodiments of the present disclosure wherein the heated and softened glass material is applied onto a surface 100b of a lower glass sheet 1a in a stepped edge configuration. Fig. 34a-b illustrates a cross sectional view seen from the side of the glass sheets whereas fig. 34c illustrates the glass sheets and edge sealing 2 of fig. 34b seen from above.

In fig. 34a, the edge sealing 2 material 5 in the form of the heated and softened glass material is applied onto the upwardly facing surface 100b.

The glass material 5 is applied so that it will bond to an end surface 100a of a first 1b glass sheets and a surface 100b of the other glass sheet 1a extending beyond the end surface 100a of the first glass sheet due to the stepped edge configuration. **In** further embodiments, the material may be applied so that it will substantially not bond to the end surface 100a.

After the heated and softened glass material 5 has been applied, the glass material 5 automatically flows a distance DIS2 (see fig. 34b and 34c) into the gap 13 between the glass sheets 1a, 1b to provide the edge sealing due to the temperature and thus viscosity of the glass material 5.

In one or more embodiments of the present disclosure, the glass material 5 may flow between 2mm and 30mm, such as between 2 and 15mm, e.g. between 2 and 8mm such as between 3 and 6 mm into the gap 13. In one or more embodiments of the present disclosure, the glass material may flow a distance DIS2 more than 2mm such as more than 4 mm, e.g. more than 6mm such as more than 10mm into the gap 3.

A heating of the glass sheet(s) 1a, 1b by means of e.g. the above mentioned local heating of the local zone(s) 52 (not illustrated in fig. 34a-34c) by one or more heaters 50 before and/or after the glass material 5 has been applied, as e.g. described above, due to heating of the glass sheet or sheets 1a, 1b in a furnace and/or the like, may help to achieve the flow of the glass material into the gap 13 and properly bond to the surfaces of the glass sheets 1a, 1b to provide the edge sealing of the VUG unit assembly.

In one or more embodiments of the present disclosure, the glass material 5 may also or alternatively at least partly be forced into the gap 13 by means of the nozzle and the pressure provided onto the heated and softened glass material 5 to press the heated and softened glass material 5 through the nozzle outlet.

## Claims

1. A method of providing an edge sealing (2) of a glass material (5) in the process of providing a glass sheet assembly (3) for a vacuum insulated glass (VIG) unit comprising paired glass sheets (1a, 1b) separated by support structures (20) maintaining a gap (13) between said paired glass sheets (1a, 1b), wherein the method comprises:
providing one or more tempered glass sheets (1a, 1b),
heating a glass material (5) to soften the glass material (5),
applying the heated, softened glass material (5) at said one or more glass sheets (1a, 1b) by means of a nozzle (6) to provide an edge sealing (2) for sealing the gap (13) between the paired glass sheets (1a, 1b),
by means of one or more heaters (50) locally heating a zone (52) of the tempered glass sheet or sheets (1a, 1b) where the heated, softened glass material (5) is applied to provide the edge sealing (2), so as to increase the temperature of said zone compared to the surrounding part of the glass sheet or sheets (1a, 1b) comprising the heated zone (52),
wherein said local heating of the zone (52) is provided prior to applying said heated, softened glass material (5) for the edge sealing (2), and wherein the heated, softened glass material (5) is applied at the heated zone, and
wherein the glass material (5) is heated to a temperature above 300°C by means of one or more heating arrangements (4,7) and applied at substantially that temperature (T2).

2. A method according to claim 1, wherein said local heating of the zone (52) is also provided
after said heated, softened glass material (5) for the edge sealing (2) is applied.

3. A method according to any of the preceding claims, wherein said zone (52) is heated to a temperature above 50°C such as above 200°C, e.g. above 300°C such as above 400°C.

4. A method according to any of the preceding claims, wherein one or more of said one or more heaters (50) for locally heating said zone, comprises a radiation heater such as an electromagnetic radiation heater (51).

5. A method according to any of the preceding claims, wherein said glass material (5) is applied to paired glass sheets (1a, 1b) separated by support structures (20), and wherein the glass material (5) flows a distance (DIS2) more than 2mm such as more than 4 mm, e.g. more than 6mm such as more than 10mm into a gap (13) between the glass sheets provided by the support structures.

6. A method according to any of the preceding claims, wherein said heated glass material (5) is forced through a dispensing nozzle outlet (11) by means of a pressure arrangement (19), wherein a pressure control arrangement (22) controls the pressure arrangement (19) so as to control the flow of supplied, heated glass material (5), wherein said control at least comprises:
• adjusting the applied pressure to stop the flow of heated glass material (5) forced through the dispensing nozzle outlet (11), and
• adjusting the applied pressure to start a flow of heated glass material (5) forced through the dispensing nozzle outlet (11),
wherein said control of the pressure arrangement (19) may be provided based on input (24) from a sensor arrangement (23).

7. A method according to any of the preceding claims, wherein the glass material (5) is heated to a temperature between 350°C and 550°C, such as between 385°C and 460°C by means of one or more heating arrangements (4,7), and applied at substantially that temperature (T2).

8. A method according to any of the preceding claims, wherein the glass material comprises less than 0.1% lead and/or less than 1% solvent and/or less than 1% binder.

9. A method according to any of the preceding claims, wherein the glass material comprises a glass solder frit material component, wherein the glass solder frit material component comprises at least one oxide selected from vanadium oxide, barium oxide, zinc oxide, bismuth oxide, aluminum oxide, silicon oxide, magnesium oxide, chromium oxide, iron oxide, cobalt oxide, sodium oxide, manganese oxide, tantalum oxide, molybdenum oxide, niobium oxide, tellurium oxide, or any combinations of one or more thereof.

10. A method according to claim 9, wherein the glass solder frit material component is a low melting point glass solder frit material.

11. A method according to any of the preceding claims, wherein the temperature difference between the temperature (T1) of the first glass sheet (1a) at said locally heated zone (52) at the area where the heated glass material is applied, and the temperature (T2) of the applied, heated glass material (5) is less than 310°C, such as less than 200°C, such as less than 100°C, e.g. as less than 50°C, such as less than 25°C when the heated and softened glass material (5) is applied.

## Patentansprüche

1. Verfahren zum Bereitstellen einer Randdichtung (2) eines Glasmaterials (5) im Zuge des Bereitstellens einer Glasscheibenanordnung (13) für eine Einheit mit vakuumisoliertem Glas (VIG), welche gepaarte Glasscheiben (1a, 1b) umfasst, die durch Stützstrukturen (20) getrennt sind, wodurch ein Spalt (13) zwischen den gepaarten Glasscheiben (1a, 1b) aufrechterhalten wird, wobei das Verfahren Folgendes umfasst:
Bereitstellen einer oder mehrerer gehärteter Glasscheiben (1a, 1b),
Aufheizen eines Glasmaterials (5) zum Erweichen des Glasmaterials (5),
Auftragen des aufgeheizten, erweichten Glasmaterials (5) auf die eine oder die mehreren Glasscheiben (1a, 1b) mithilfe einer Düse (6) zum Bereitstellen einer Randdichtung (2) zum Abdichten des Spalts (13) zwischen den gepaarten Glasscheiben (1a, 1b),
mithilfe eines oder mehrerer Heizgeräte (50), lokales Aufheizen einer Zone (52) der gehärteten Glasscheibe oder -scheiben (1a, 1b), wobei das aufgeheizte, erweichte Glasmaterial (5) aufgetragen wird, um die Randdichtung (2) derart bereitzustellen, die Temperatur der Zone im Vergleich zu dem umliegenden Teil der Glasscheibe oder -scheiben (1a, 1b), die die aufgeheizte Zone (52) umfasst/umfassen, zu erhöhen,
wobei das lokale Aufheizen der Zone (52) vor dem Auftragen des aufgeheizten, erweichten Glasmaterials (5) für die Randdichtung (2) bereitgestellt wird, und wobei das aufgeheizte, erweichte Glasmaterial (5) auf die aufgeheizte Zone aufgetragen wird, und wobei das Glasmaterial mithilfe einer oder mehrerer Heizvorrichtungen (4, 7) auf eine Temperatur von über 300 °C aufgeheizt und bei im Wesentlichen dieser Temperatur (T2) aufgetragen wird.

2. Verfahren nach Anspruch 1, wobei das lokale Aufheizen der Zone (52) auch nach dem Auftragen des aufgeheizten, erweichten Glasmaterials (5) für die Randdichtung (2) bereitgestellt wird.

3. Verfahren nach einem der vorhergehenden Ansprüche, wobei die Zone (52) auf eine Temperatur über 50 °C wie zum Beispiel über 200 °C, z. B. über 300 °C wie zum Beispiel über 400 °C aufgeheizt wird.

4. Verfahren nach einem der vorhergehenden Ansprüche, wobei eines oder mehrere des einen oder der mehreren Heizgeräte (50) zum lokalen Aufheizen der Zone eine Strahlungsheizung wie z. B. eine elektromagnetische Strahlungsheizung (51) umfassen.

5. Verfahren nach einem der vorhergehenden Ansprüche, wobei das Glasmaterial (5) auf gepaarte Glasscheiben (1a, 1b) aufgetragen wird, die durch Stützstrukturen (20) getrennt sind, und wobei das Glasmaterial (5) über eine Distanz (DIS2) von mehr als 2 mm, zum Beispiel mehr als 4 mm, z. B. mehr als 6 mm, zum Beispiel mehr als 10 mm in einen Spalt (13) zwischen den Glasscheiben fließt, der von den Stützstrukturen bereitgestellt wird.

6. Verfahren nach einem der vorhergehenden Ansprüche, wobei das aufgeheizte Glasmaterial (5) mithilfe einer Druckvorrichtung (19) durch einen Dosierdüsenausgang (11) gedrängt wird, wobei eine Drucksteuervorrichtung (22) die Druckvorrichtung (19) derart steuert, dass der Fluss des bereitgestellten, aufgeheizten Glasmaterials (5) gesteuert wird, wobei die Steuerung mindestes Folgendes umfasst:
• Anpassen des aufgewendeten Drucks zum Stoppen des Flusses des aufgeheizten Glasmaterials (5), das durch den Dosierdüsenausgang (11) gedrängt wird, und
• Anpassen des aufgewendeten Drucks zum Starten eines Flusses des aufgeheizten Glasmaterials (5), das durch den Dosierdüsenausgang (11) gedrängt wird,
wobei die Steuerung der Druckvorrichtung (19) basierend auf einer Eingabe (24) von einer Sensorvorrichtung (23) bereitgestellt werden kann.

7. Verfahren nach einem der vorhergehenden Ansprüche, wobei das Glasmaterial (5) mithilfe einer oder mehrerer Heizvorrichtungen (4, 7) auf eine Temperatur zwischen 350 °C und 550 °C aufgeheizt wird, zum Beispiel zwischen 385 °C und 460 °C, und bei im Wesentlichen dieser Temperatur (T2) aufgetragen wird.

8. Verfahren nach einem der vorhergehenden Ansprüche, wobei das Glasmaterial weniger als 0,1 % Blei und/oder weniger als 1 % Lösungsmittel und/oder weniger als 1 % Bindemittel umfasst.

9. Verfahren nach einem der vorhergehenden Ansprüche, wobei das Glasmaterial eine Komponente aus Glaslötfrittenmaterial umfasst, wobei die Komponente aus Glaslötfrittenmaterial mindestens ein Oxid ausgewählt aus Vanadiumoxid, Bariumoxid, Zinkoxid, Wismutoxid, Aluminiumoxid, Siliziumoxid, Magnesiumoxid, Chromoxid, Eisenoxid, Kobaltoxid, Natriumoxid, Manganoxid, Tantaloxid, Molybdänoxid, Nioboxid, Telluroxid oder beliebige Kombinationen aus einem oder mehreren davon umfasst.

10. Verfahren nach Anspruch 9, wobei es sich bei der Komponente aus Glaslötfrittenmaterial um Glaslötfrittenmaterial mit einem niedrigen Schmelzpunkt handelt.

11. Verfahren nach einem der vorhergehenden Ansprüche, wobei der Temperaturunterschied zwischen der Temperatur (T1) der ersten Glasscheibe (1a) bei der lokal erhitzten Zone (52) in dem Bereich, in dem das erhitzte Glasmaterial aufgetragen wird, und der Temperatur (T2) des aufgetragenen, erhitzten Glasmaterials (5) weniger als 310 °C beträgt, zum Beispiel weniger als 200 °C, zum Beispiel weniger als 100 °C, z. B. weniger als 50 °C, zum Beispiel weniger als 25 °C, wenn das aufgeheizte und erweichte Glasmaterial (5) aufgetragen wird.

## Revendications

1. Procédé de scellement de bord (2) d'un matériau en verre (5) lors de la fabrication d'un ensemble de feuilles de verre (3) pour une unité de verre isolé sous vide (VIG) comprenant des feuilles de verre appariées (1a, 1b) séparées par des structures de support (20) maintenant un espace (13) entre lesdites feuilles de verre appariées (1a, 1b), dans lequel le procédé comprend :
la fourniture d'une ou plusieurs feuilles de verre trempé (1a, 1b),
le chauffage d'un matériau en verre (5) pour ramollir le matériau en verre (5),
l'application du matériau en verre chauffé et ramolli (5) sur une ou plusieurs feuilles de verre (1a, 1b) au moyen d'une buse (6) pour réaliser un scellement de bord (2) pour sceller l'espace (13) entre les feuilles de verre appariées (1a, 1b),
au moyen d'un ou plusieurs éléments chauffants (50), le chauffage local d'une zone (52) de la ou des feuilles de verre trempé (1a, 1b) où le matériau en verre chauffé et ramolli (5) est appliqué pour assurer le scellement de bord (2), de manière à augmenter la température de ladite zone par rapport à la partie environnante de la ou des feuilles de verre (1a, 1b) comprenant la zone chauffée (52),
dans lequel ledit chauffage local de la zone (52) est fourni avant l'application dudit matériau en verre chauffé et ramolli (5) pour le scellement de bord (2), et
dans lequel le matériau en verre chauffé et ramolli (5) est appliqué au niveau de la zone chauffée, et
dans lequel le matériau en verre (5) est chauffé à une température supérieure à 300°C au moyen d'un ou plusieurs agencements de chauffage (4, 7) et appliqué sensiblement à cette température (T2).

2. Procédé selon la revendication 1, dans lequel ledit chauffage local de la zone (52) est également fourni après l'application dudit matériau en verre chauffé et ramolli (5) pour le scellement de bord (2).

3. Procédé selon l'une quelconque des revendications précédentes, dans lequel ladite zone (52) est chauffée à une température supérieure à 50°C, telle que supérieure à 200°C, telle que supérieure à 300°C, telle que supérieure à 400°C.

4. Procédé selon l'une quelconque des revendications précédentes, dans lequel un ou plusieurs desdits un ou plusieurs éléments chauffants (50) destinés à chauffer localement ladite zone comprennent un élément chauffant à rayonnement tel qu'un élément chauffant à rayonnement électromagnétique (51).

5. Procédé selon l'une quelconque des revendications précédentes, dans lequel ledit matériau en verre (5) est appliqué à des feuilles de verre appariées (1a, 1b) séparées par des structures de support (20), et dans lequel le matériau en verre (5) s'écoule sur une distance (DIS2) supérieure à 2 mm, telle que supérieure à 4 mm, telle que supérieure à 6 mm, telle que supérieure à 10 mm, dans un espace (13) entre les feuilles de verre fournies par les structures de support.

6. Procédé selon l'une quelconque des revendications précédentes, dans lequel ledit matériau en verre chauffé (5) est forcé à travers une sortie de buse de distribution (11) au moyen d'un agencement de pression (19),
un agencement de régulation de pression (22) commande l'agencement de pression (19) de manière à réguler le débit de matériau en verre chauffé fourni (5), ledit agencement de régulation comprenant au moins :
• l'ajustement de la pression appliquée pour arrêter le flux de matériau en verre chauffé (5) forcé à travers la sortie de la buse de distribution (11), et
• l'ajustement de la pression appliquée pour démarrer un flux de matériau en verre chauffé (5) forcé à travers la sortie de la buse de distribution (11),
dans lequel ladite commande de l'agencement de pression (19) peut être fournie sur la base d'une entrée (24) provenant d'un agencement de capteur (23).

7. Procédé selon l'une quelconque des revendications précédentes, dans lequel le matériau en verre (5) est chauffé à une température comprise entre 350°C et 550°C, telle qu'entre 385°C et 460°C au moyen d'un ou plusieurs agencements de chauffage (4, 7), et appliqué sensiblement à cette température (T2).

8. Procédé selon l'une quelconque des revendications précédentes, dans lequel le matériau en verre comprend moins de 0,1 % de plomb et/ou moins de 1 % de solvant et/ou moins de 1 % de liant.

9. Procédé selon l'une quelconque des revendications précédentes, dans lequel le matériau en verre comprend un composant de matériau de fritte de soudure en verre, dans lequel le composant de matériau de fritte de soudure en verre comprend au moins un oxyde choisi parmi l'oxyde de vanadium, l'oxyde de baryum, l'oxyde de zinc, l'oxyde de bismuth, l'oxyde d'aluminium, l'oxyde de silicium, l'oxyde de magnésium, l'oxyde de chrome, l'oxyde de fer, l'oxyde de cobalt, l'oxyde de sodium, l'oxyde de manganèse, l'oxyde de tantale, l'oxyde de molybdène, l'oxyde de niobium, l'oxyde de tellure, ou toute combinaison d'un ou plusieurs de ceux-ci.

10. Procédé selon la revendication 9, dans lequel le composant de matériau de fritte de soudure en verre est un matériau de fritte de soudure en verre à bas point de fusion.

11. Procédé selon l'une quelconque des revendications précédentes, dans lequel la différence de température entre la température (T1) de la première feuille de verre (1a) au niveau de ladite zone chauffée localement (52) à l'endroit où le matériau en verre chauffé est appliqué, et la température (T2) du matériau en verre chauffé (5) appliqué est inférieure à 310 °C, telle qu'inférieure à 200 °C, telle qu'inférieure à 100 °C, telle qu'inférieure à 50 °C, telle qu'inférieure à 25 °C lorsque le matériau en verre chauffé et ramolli (5) est appliqué.
